# EUROPEAN PATENT SPECIFICATION

(11) **EP 2 337 808 B1**
(45) Date of publication and mention of the grant of the patent: **15.03.2017**
(21) Application number: 09785168.7
(22) Date of filing: 29.09.2009
(51) Int. Cl.: C08G 18/67, C08G 18/79, C08L 75/16, C08F 299/02, C08J 5/24

(54) **CROSSLINKABLE MOULDING COMPOSITION**
VERNETZBARE FORMMASSE
COMPOSITION RÉTICULABLE DE MOULAGE

(30) Priority: 29.09.2008 US 100822 P
(43) Date of publication of application: 29.06.2011
(73) Proprietor: Scott Bader Company Limited, Wellingborough Northamptonshire NN29 7RL (GB)
(72) Inventor: PANTHER, Richard, Austin, Northamptonshire (GB)
(74) Representative: Webster, Jeremy Mark
(86) International application number: PCT/GB2009/002301
(87) International publication number: WO 2010/035006

(56) References cited:
- WO-A1-2005/080484
- WO-A1-2006/041089
- WO-A1-2008/119973
- US-A1- 2005 020 711

## Description

The present invention relates generally to a thermosetting resin composition and a cured resin derived from such a composition. In particular, the present invention is concerned with a thermosetting resin composition based on a functionalised isocyanate monomer for use in moulding. The invention provides moulding compositions for reinforcement for use in making shaped articles including laminates, and methods of making such resins and articles.

Thermosetting resins curable by a free radical copolymerisation process are well known. Examples of such are unsaturated polyester resins and so-called vinyl ester resins. In both cases, a polymer containing ethylenically unsaturated groups such as fumarate or methacrylate is dissolved in a copolymerisable monomer such as styrene. Such resins are liquid under normal conditions but, when treated with a source of free radicals such as an organic peroxide initiator, will rapidly crosslink to form a hard thermoset plastic mass. Such a process is used in the production of, for example, adhesives and shaped articles.

An important property of a thermoset plastic to be used in moulding processes for the production of shaped articles is its heat deflection temperature (sometimes termed 'heat distortion temperature' and often abbreviated by those skilled in the art to 'HDT'), which is a measure of the stiffness of the crosslinked resin at elevated temperature.

HDT is one of a range of mechanical, thermal and chemical material properties which must be demonstrated by a resin composition if it is to be suitable for a specific application.

HDT can be increased by raising the number of ethylenically unsaturated groups in either or both of the polymer and copolymerisable monomer(s) making up the resin, giving a higher crosslink density in the finished article. However, a higher crosslink density also makes the finished article more brittle, such that its mechanical performance is impaired. In particular, articles made from high crosslink density resins exhibit low strain to failure in either tension or bending and therefore are of low strength.

Consequently, it has proved difficult to extend the use of thermoset plastics into many applications in which the finished article will be exposed to high temperatures (e.g. in excess of 200°C) and significant mechanical stress, because of, on the one hand, the comparatively low heat deflection temperatures offered by traditional thermosetting resins and, on the other hand, the inferior mechanical properties resulting from the use of resins designed to give a high crosslink density in order to attain a high HDT.

Furthermore, the mechanical properties of such curable resins when combined with a reinforcing component such as a fibre, are difficult to predict. For example, a resin having a desirable HDT may, when reinforced, possess insufficient tensile and flexural strength to make it useful for forming shaped articles, particularly if those articles are to be subjected to significant loads.

There remains a need within the art for thermosetting resins with HDTs above 200°C, which are both curable, as is usual with such products, by a free radical copolymerisation process and which can be used to produce reinforced articles having good mechanical properties. In particular, there remains a need for thermosetting resins that exhibit a range of desirable tensile and flexural properties (in particular, tensile and flexural strength, modulus and strain to failure) that would enable them to be used as a substitute for traditional materials such as metals.

Thermosetting resins having HDTs up to 252°C and having acceptable tensile and flexural properties when fabricated into cured laminates are disclosed in patent application PCT/GB2008/001120. The HDTs of these resins render them valuable for the manufacture of articles to be used in many high temperature applications. In order to achieve the maximum HDT of such a resin the cured resin must be exposed to a postcure temperature close to the maximum HDT.

For some applications, one example being aerospace applications, HDTs approaching, or even exceeding, 300°C are desirable. However, the HDT obtainable may be limited by the postcure temperature to which it is possible to expose the shaped article.

Alternative thermosetting resins having extremely high heat resistances of this nature and suitable for the aerospace industry are known. Examples of such resins are polycyanate resins and polyimide resins, such as those obtainable from YLA Inc., of Benicia, California, USA. These resins, however, require curing at temperatures. in excess of 300°C to attain their maximum heat resistances, the curing process also requiring pressures significantly above normal atmospheric pressures. Polycyanate resin RS-9, for instance, typically requires pressures up to 100psi and a cure temperature of 398°F (193°C) followed by a postcure temperature of 600°F (315-5°C). The cured product has a glass transition temperature of 700°F (371°C).

Document WO2006/041089 relates to a sheet like material that can be molded. The material is prepared by adding a urethane acrylate to a di(meth)acrylate (Table 1). The urethane acrylate is a reaction product of trimerized hexamethylenediisocyante and pentaerythritoltriacrylate or isophorone diisocyanate and pentaerythritoltriacrylate.

It would therefore be advantageous to the art if thermosetting resins could be made available which are curable at normal ambient pressures and, in the first instance, temperatures, and which are capable of achieving heat deflection temperatures (HDTs) of the order of about 260°C and above, and especially about 290°C and above while retaining acceptable mechanical properties (tensile strength, flexural strength, etc) in articles such as fibre reinforced laminates. It would also be desirable to provide thermosetting resins capable of achieving such high HDTs on exposure to a postcure temperature significantly below the HDT itself.

### Summary of the Invention

Surprisingly, the present inventor has found that a functionalised isocyanate resin derived from an ethylenically unsaturated functionalised isocyanate product having at least six ethylenically unsaturated groups and a crosslinking monomer having at least two, suitably at least three ethylenically unsaturated groups is capable of achieving a heat deflection temperature in excess of 260°C, and often in excess of 290°C following postcure at a temperature of only 200°C. Such a resin is especially suitable for use in moulding and, when reinforced, attains good mechanical, e.g. tensile and flexural, properties.

Without wishing to be bound by theory, the present inventor believes that the provision of a plurality of, and especially at least six, ethylenically unsaturated groups on each isocyanate monomer produces a functionalised isocyanate monomer that reacts not only with the cross-linking agent but also with other similarly functionalised isocyanates to form a network of functionalised isocyanates. The resultant cross-linked resin not only has a high HDT, but is particularly suitable for reinforcement and, when reinforced, demonstrates excellent tensile and flexural properties.

As also discussed below, examples of such functionalised isocyanate compositions, when cross-linked, provide a resin that is highly suitable for use in making shaped articles, having a high HDT of at least 260°C and, when reinforced, exhibiting excellent tensile and flexural properties.

The present invention is concerned with cross-linkable moulding compositions, functionalised isocyanate products for use in such compositions, kits comprising such compositions and cross-linked resins made from such compositions.

Furthermore, the present invention is concerned with processes for making such compositions, resins and articles, as well as the use of such compositions in those processes.

In a first aspect of the invention, there is provided a cross-linkable moulding composition comprising
(1) a functionalised isocyanate product being the reaction product of
   (i) an isocyanate component having an isocyanate functionality of two or more; and
   (ii) an ethylenically unsaturated component having
      at least one functional group that is reactive with an isocyanate group of the isocyanate component and
      at least two ethylenically unsaturated groups; and
(2) a monomer component comprising a cross-linking monomer having at least two ethylenically unsaturated groups, wherein at least one of an ethylenically unsaturated component (ii) and/or a monomer component (2) are selected to have at least three ethylenically unsaturated groups.

Such a composition can be cross-linked, typically by addition of an initiator, as discussed below.

The present moulding composition contains an ethylenically unsaturated functionalised isocyanate product which the inventor has found to be particularly effective as the monomer in a resin which demonstrates high HDT of 260°C and above, especially 280°C and above when cured at 200°C in combination with excellent tensile and flexural properties. Thus, advantageously, the present moulding compositions may exhibit an HDT of at least 60°C higher than the cure temperature, suitably at least 80°C higher.

The present moulding compositions, being a combination of a specific class of functionalised isocyanate and a cross-linking monomer may alleviate the drawbacks associated with known resins for moulding and reinforcement, namely that high HDT can only be achieved at the expense of a brittle resin, i.e. poor tensile and flexural properties. The present cross-linkable compositions are particularly suitable for use in forming shaped articles, particularly for use as a substitute for traditional materials such as metals.

The isocyanate component (i) and the ethylenically unsaturated component (ii) may be selected so that the functionalised isocyanate product has at least six, more preferably more than six ethylenically unsaturated groups, suitably eight or more such unsaturated groups.

The isocyanate component (i) is required to have an isocyanate functionality of at least two. The functionality denotes the number of isocyanate groups (-NCO) per molecule i.e. a pure diisocyanate has an isocyanate functionality of 2. Various forms of modified di- and polyisocyanates are commercially available.

Example reactions to generate polyisocyanates are homooligomerisation reactions such as trimerisation (especially isocyanurate formation), dimerisation (uretidone formation) and biuret formation (reaction of urea of a diisocyanate with excessive diisocyanate).

Commercially available polyisocyanate products often comprise mixtures of various isomers and oligomers. In such cases the number average functionality of the blend of molecules is determined; this is an important characteristic of the mixture and is used by manufacturers to designate their commercial products.

The average isocyanate functionality is thus not necessarily an integer. For example, a mixture consisting essentially of uretidone dimer residues and isocyanurate trimer residues would have an average isocyanate functionality of between two and three, depending upon the relative amounts of the residues. Nevertheless, isocyanates having 2, 3 or 4 isocyanate groups and mixtures thereof may be suitable for use in the present invention.

In the following the term "isocyanate functionality" is used to also mean "average isocyanate functionality" when applied to blends of molecules, as is customary in this field.

The broad classes of diisocyanates commercially available include aliphatic alkylene diisocyanates {such as 1,6-hexamethylene diisocyanate (HDI), 1,4-tetramethylene diisocyanate and 1,12-dodecane diisocyanate, for example}, cyclo aliphatic diisocyanates {such as 1,3-and 1,4-cyclohexane diisocyanates and isophorone diisocyanate (IPDI) and including hydrogenated aromatic diisocyanates such as hydrogenated diphenylmethane diisocyanate (hMDI) hydrogenated toluene diisocyanate (hTDI), hydrogenated tetramethylxylylene diisocyanate (hTMXDI) and hydrogenated polymethylene polyphenyl diisocyanate (hPAPI), for example} and aromatic diisocyanates {such as 2,4- and 2,6- toluene diisocyanate (TDI) and 2,2'-, 2,4'- and 4,4'-diphenylmethane diisocyanates, for example}.

Also, as discussed above, modified versions of such diisocyanates may be available, including dimers, trimers, uretidone-modified, urea modified, urethane modified and allophanate-modified diisocyanates.

In preferred embodiments of the present invention the isocyanate component (i) is a non-aromatic isocyanate.

Preferably the isocyanate component (i) is derived from at least one selected from an aliphatic alkylene isocyanate and/or a cyclic aliphatic isocyanate (including a hydrogenated aromatic isocyanate). In this regard the component (i) may be composed of a mixture of isocyanates.

Surprisingly, the present inventor has also found that especially enhanced results are obtainable (in terms of the combination of high HDT observed for the crosslinked resin in combination with excellent mechanical properties for the crosslinked resin when reinforced) in cases where the isocyanate functionality is selected in dependence upon the class of isocyanate chosen.

Without wishing to be bound by theory, it is thought that if the isocyanate component (i) includes at least some cyclic dimer and trimer residues, this enhances the chain stiffness of the resultant functionalised isocyanate product (1) which also contributes to the increased HDT of the crosslinked resin.

Thus, according to embodiments of the invention, preferably the isocyanate component (i) contains isocyanurate trimer residues of formula (I): 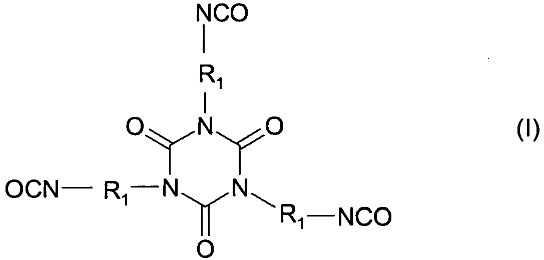 wherein R₁ is a divalent organic group selected from an aliphatic alkylene group, a cycloaliphatic alkylene group, an arylene group and an alkarylene group. Preferably the isocyanate contains isocyanurate trimer residues of formula (I) wherein R₁ is selected from an aliphatic alkylene group (especially having from 4 to 12 carbon atoms in the alkylene radical) and a cycloaliphatic group.

In especially preferred embodiments R₁ is a cycloaliphatic group such as the isophorone radical. Suitably, especially in cases where the isocyanate component contains trimer residues of formula (I) in which R₁ is a cycloaliphatic alkylene group the isocyanate component is selected to have an isocyanate functionality of from 2 to 4, especially between 3 and 4.

In a first preferred group of embodiments the isocyanate component contains trimer residues of formula (I) in which R₁ is an isophorone radical and the isocyanate has a functionality of from 3 to 4.

In further embodiments the isocyanate component (i) contains iminooxadiazine dione trimer residues of formula (II): 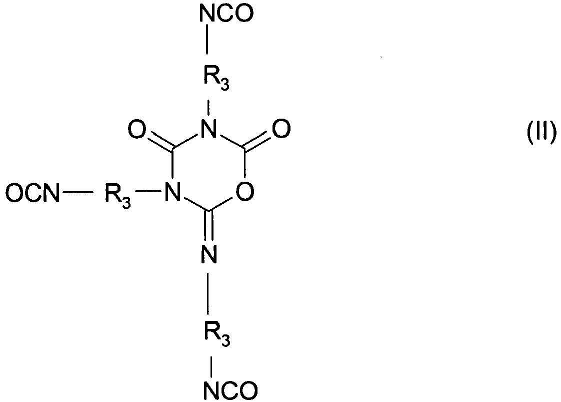 wherein R₃ is a divalent organic group selected from an aliphatic alkylene group, a cycloaliphatic alkylene group, an arylene group and an alkarylene group.

Suitable isocyanate components (i) may also contain uretidone dimer residues of formula (III), optionally in addition to trimer residues (I) and/or (II): 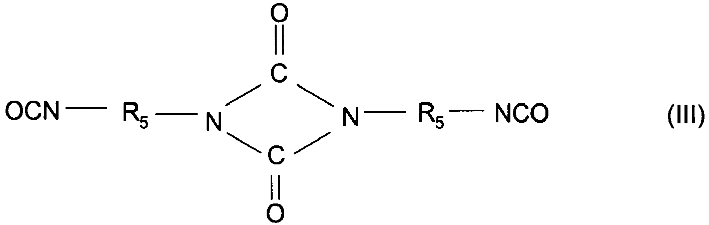 wherein R₅ is a divalent organic group selected from an aliphatic alkylene group, a cycloaliphatic alkylene group, an arylene group and an alkarylene group. Preferably, R₅ is selected from a C₄ to C₁₂ alkylene group and a cycloaliphatic group. It is especially preferred that the isocyanate component (i) contains uretidone dimer residues of formula (III) in cases where the isocyanate is derived from an aliphatic alkylene diisocyanate.

In a second preferred group of embodiments of the present invention, the isocyanate component (i) is derived from an alkylene diisocyanate having from 4 to 12 carbon atoms in the alkylene chain, and thus contains dimer residues of formula (III) in which R₅ is a C₄ to C₁₂ alkylene group. Preferably in this group of embodiments the isocyanate has an isocyanate functionality of from 2 to 3.5.

Conveniently, in such embodiments the isocyanate component (i) has a functionality of less than 3. This is desirable as it is thought that the cyclic dimer residues of formula (III) could provide enhanced chain stiffness as compared to buiret or perhaps higher oligomers, especially in cases where the isocyanate is derived from an aliphatic alkylene diisocyanate.

Preferably in this group of embodiments the isocyanate component (i) is derived from hexamethylene diisocyanate and has an isocyanate functionality of more than 2 and less than 3.5.

The isocyanate component may comprise a so called "chain extended" isocyanate. A chain extended isocyanate is an isocyanate formed from the reaction of a di or higher isocyanate (X) with an "extender" molecule (Y), which extender molecule comprises two or more functional groups that are reactive with an isocyanate group, to form an isocyanate terminated molecule of the form X-Y-X.

A greater or lesser degree of chain extension, i.e. higher or lower values of n in X-(Y-X)ₙ, can be achieved by controlling the relative amounts of isocyanate. (X) and extender molecule (Y). Suitably n is in the range 1 to 5. It is particularly preferred that n = 1.

Thus, suitably the di or higher isocyanate (X) is reacted in excess with the extender molecule (Y), suitably at least a 2:1 excess based on moles of isocyanate (X) and extender molecule (Y).

Suitably the di or higher isocyanate (X) is selected from the isocyanates discussed herein.

Preferably, the extender molecule is a diol (i.e. the functional group reactive with the isocyanate is a hydroxyl). The diol may be a simple diol, for example ethylene glycol, propylene glycol, 1,3-butanediol, neopentyl glycol, 1,6-hexanediol and such-like. Alternatively, the diol may be an ether diol (such as diethylene glycol or dipropylene glycol), a polyether diol (for instance, a polyethylene or polypropylene glycol), a polycaprolactone diol or a polyester diol. Preferred diols are ethylene glycol, diethylene glycol, dipropylene glycol, polyethylene glycol and polypropylene glycol. Particularly preferred diols are ethylene glycol and polyethylene glycol. In the case of polyethylene glycol, preferably the Mw is less than 1000, more preferably less than 500 and even more preferably less than 300. A Mw in the range 150 to 250 is particularly preferred.

The isocyanate component (i) undergoes reaction with (ii) an ethylenically unsaturated component having at least one functional group that is reactive with an isocyanate group of the isocyanate component and at least two ethylenically unsaturated groups.

Preferably the ethylenically unsaturated component includes an acrylate component and the ethylenically unsaturated group is a (meth)acrylate group. Preferred acrylate components are discussed below.

As used herein, the term "(meth)acrylate(s)" includes acrylate(s) and methacrylate(s), as is well known in the art.

Suitably, in the reaction between the isocyanate component and the acrylate component (to form the functionalised isocyanate product (1)) there is no reaction between two or more isocyanate components. For example, suitably there is no reaction between diisocyanates to form dimeric or trimeric products of the diisocyanate. Similarly, there is suitably no reaction between two or more urethane acrylate products during the formation of such a urethane acrylate product (1).

As for the ethylenically unsaturated component, preferably the functional group that is reactive with the isocyanate group of the isocyanate is a hydroxyl-functional group, capable of reaction to form a urethane group. Thus, preferably the functionalised isocyanate product is a urethane acrylate product.

The ethylenically unsaturated component (ii) may comprise one or more components for reaction with the or each isocyanate component (i). Suitably the ethylenically unsaturated component (ii) includes at least one component which contains at least two ethylenically unsaturated groups. Thus, the ethylenically unsaturated component may include an acrylate component which has at least two (meth)acrylate groups. This assists in the formation of a suitable cross-linked network in the finished resin and contributes to the combination of excellent tensile and flexural properties, as well as a high HDT.

Typically such an acrylate component may include at least one selected from trimethylolpropane di(meth)acrylate and glycerol di(meth)acrylate.

However, according to especially preferred embodiments the ethylenically unsaturated component (ii) includes at least some of a component selected to have from 3 to 5 ethylenically unsaturated groups. Thus, a tri- or higher (meth)acrylate such as pentaerythritol tri(meth)acrylate and dipentaerythritol penta(meth)acrylate may be employed.

Preferably, the ethylenically unsaturated component (ii) comprises a combination of two or more components.

Suitably the ethylenically unsaturated component (ii) comprises a combination of:
(iia) an ethylenically unsaturated component having from 3 to 5 ethylenically unsaturated groups, and
(iib) an ethylenically unsaturated component having 1 or 2 ethylenically unsaturated groups. More preferably, the ethylenically unsaturated component (ii) comprises a combination of:
(iia) an acrylate component having from 3 to 5 (meth)acrylate groups, and
(iib) an acrylate component having 1, or optionally 2, (meth)acrylate groups.

In the case where the acrylate component comprises a mono(meth)acrylate group, preferably the acrylate component comprises a mono-hydroxy mono-(meth)acrylate. Particularly preferred mono(meth)acrylates include at least one selected from hydroxyethyl (meth)acrylate, hydroxypropyl (meth)acrylate, hydroxybutyl (meth)acrylate, 2-hydroxyethyl acrylate and the like.

Most preferably, the ethylenically unsaturated component (ii) comprises a combination of:
(iia) a hydroxyfunctional tri(meth)acrylate and/or a hydroxyfunctional tetra(meth)acrylate, and
(iib) a hydroxyfunctional di(meth)acrylate.

Conveniently, mol ratio of any such components (iia) to (iib) provided for reaction with isocyanate (i) is about 80:20 to 20:80, preferably 70:30 to 30:70, more preferably 60:40 to 40:60 and especially about 55:45.

In cases where the ethylenically unsaturated component (ii) comprises a combination of components, typically the functionalised isocyanate product (1) is the reaction product of an isocyanate component (i) with a first ethylenically unsaturated component followed by a second ethylenically unsaturated component.

Conveniently, the mol ratio of components (iia) to (iib) which undergo reaction with the isocyanate (1) is from 80:20 to 20:80, preferably 70:30 to 30:70 and especially about 65:35.

Preferably the functionalised isocyanate product (1) is the reaction product of an isocyanate component (i) with a first ethylenically unsaturated component (iia) followed by reaction with a second ethylenically unsaturated component (iib).

Preferably, the ethylenically unsaturated component (ii) includes at least one selected from trimethylol propane di(meth)acrylate and glycerol di(meth)acrylate. At least some glycerol dimethacrylate is especially preferred, conveniently as a component (iib).

Most preferably, the ethylenically unsaturated component (ii) comprises, or optionally consists of, a combination of (iia) pentaerythritol triacrylate and (iib) glycerol dimethacrylate.

The present inventor has found that the properties of the final resin are improved if, as is preferred, the amount of ethylenically unsaturated component (ii) is present in stoichiometric excess with respect to the isocyanate groups of the isocyanate component (i). That is, the number of functional groups reactive with the isocyanate group of the isocyanate component (thus, suitably the number of hydroxyl groups) is greater than the number of isocyanate groups.

In particular, the ethylenically unsaturated component (ii), such as a hydroxy-acrylate component, is preferably present in at least 3%, preferably at least 5%, equivalence excess (equivalents of hydroxyl-functionality over isocyanate functionality) with respect to the isocyanate groups of the isocyanate component. Even better results may be achieved if the hydroxy-acrylate component is present in at least 20% equivalence excess, more preferably at least 35% equivalence excess, with respect to the isocyanate groups of the isocyanate component.

It is particularly preferred that, in the case where the functionalised isocyanate product (1) is the reaction product of a combination of two or more components which provide the ethylenically unsaturated component (ii), each ethylenically unsaturated component (iia), (iib) is present in sub-stoichiometric amounts to the isocyanate component (i). However, preferably the combined amounts of ethylenically unsaturated components (iia) and (iib) preferably represent a stoichiometric excess of functional groups reactive with the isocyanate group, as compared to the isocyanate component.

In addition to the functionalised isocyanate product (1) the present moulding composition comprises a monomer component (2) in the form of a cross-linking monomer having at least two ethylenically unsaturated groups.

Preferably the cross-linking monomer of the monomer component (2) comprises a di- or higher vinyl, acrylate or allyl monomer. Suitable cross-linking monomers include at least one selected from divinyl benzene (DVB); a hydroxy-functional (meth)acrylate as discussed above in relation to the acrylate component, such as glycerol di(meth)acrylate, trimethylolpropane di(meth)acrylate, pentaerythritol tri(meth)acrylate and dipentaerythritol penta(meth)acrylate; di and polyfunctional (meth)acrylates that do not have a hydroxyl group, such as ethylene glycol di(meth)acrylate, diethylene glycol di(meth)acrylate, dipropylene glycol di(meth)acrylate 1,3-butanediol di(meth)acrylate, 1,4-butanediol di(meth)acrylate, 1,6-hexanediol di(meth)acrylate, trimethylolpropane tri(meth)acrylate tris(2-hydroxyethyl)isocyanurate triacrylate and pentaerythritol tetra(meth)acrylate; and ethoxylated or propoxylated versions of the above mentioned (meth)acrylates, such as ethoxylated trimethylolpropane tri(meth)acrylate, ethoxylated pentaerythritol tetra(meth)acrylate, ethoxylated bisphenol A di(meth)acrylate, propoxylated trimethylolpropane tri(meth)acrylate), propoxylated glycerol tri(meth)acrylate and the like.

Conveniently the cross linking monomer component includes at least one monomer that does not contain a (meth)acrylate group, for example a vinyl or allyl monomer. Also in some embodiments where the cross linking monomer includes a (meth)acrylate monomer, conveniently there is at least one di or polyfunctional (meth)acrylate that does not have a hydroxyl group, especially selected from the monomers listed above.

Furthermore, especially also in embodiments where the cross linking monomer includes a (meth)acrylate component, conveniently the monomer does not contain a free carboxyl group. (Monomers having carboxyl groups may be provided by dimers/trimers of (meth)acrylic acids, for example).

According to embodiments of the invention, the crosslinking monomer component (2) includes at least one component having two ethylenically unsaturated groups and especially includes one or more selected from glycerol di(meth)acrylate, divinyl benzene, ethylene glycol di(meth)acrylate and tripropylene glycol di(meth)acrylate.

In especially preferred embodiments the crosslinking monomer component (2) includes at least some monomer having at least 3 ethylenically unsaturated groups, optionally in addition to, or in place of, crosslinking monomer component having 2 ethylenically unsaturated groups. Thus, suitably, the crosslinking monomer component (2) includes a monomer having up to 8, preferably up to 6 and most preferably 4 or 3 ethylenically unsaturated groups.

Thus, the crosslinking monomer component (2) may also optionally include one or more selected from pentaerythritol tetra(meth)acrylate, dipentaerythritol hexa(meth)acrylate, trimethylol propane triacrylate, tris(2-hydroxyethyl) isocyanurate triacrylate and ethoxylated and propoxylated versions thereof.

Suitably at least some of the cross-linking monomer (2) can be provided by a stoichiometric excess of the ethylenically unsaturated component (ii). Similarly, in the case of the stoichiometric excess being provided by the combination of ethylenically unsaturated components (iia) and (iib), at least some of the cross-linking monomer (2) can be provided by the excess of a component (iia) or (iib). In such embodiments, preferably an excess of component (iib) provides at least some of the cross-linking monomer (2).

In especially preferred embodiments glycerol di(meth)acrylate is included as a cross-linking monomer (2), provided as an excess of ethylenically unsaturated component (iib).

Additionally or alternatively, at least some cross-linking monomer (2) can be provided by components in admixture with an ethylenically unsaturated component (ii) provided for reaction with the isocyanate component (i).

Suitably, in addition to the cross-linking monomer, the monomer component (2) also includes at least one reactive diluent monomer, which reactive diluent monomer comprises at least one ethylenically unsaturated group. Such a reactive diluent monomer can be copolymerised with the functionalised isocyanate product using free radical polymerisation. Such a reactive diluent monomer is thus preferably not employed as a cross-linking monomer.

Preferred examples of a reactive diluent monomer comprising one ethylenically unsaturated group include vinyl aromatic monomers, especially styrene, methylstyrene, ethyl styrene, halogenated styrene and vinyl toluene. Such monomers can be added to the reactive composition comprising the isocyanate component (i) and the ethylenically unsaturated component (ii) (i.e. prior to reaction), for example to lower viscosity during the reaction to form the urethane acrylate product.

It is especially preferred that the reactive diluent monomer system includes at least some vinyl aromatic monomer, such as styrene and/or vinyltoluene.

Suitably at least some of the reactive diluent monomer can be provided by a stoichiometric excess of ethylenically unsaturated component (ii). Similarly, in the case of a stoichiometric excess being provided by the combination of components (iia) and (iib), at least some of the reactive diluent monomer can be provided by the excess of ethylenically unsaturated components.

Suitably, the monomer component (2) comprises more than one monomer. Preferably the monomer component comprises at least one reactive diluent monomer having one ethylenically unsaturated bond and at least one cross-linking monomer having two or more ethylenically unsaturated bonds. Most preferably, the monomer component (2) comprises at least one reactive diluent monomer having an ethylenically unsaturated bond and at least one cross-linking monomer having more than two ethylenically unsaturated bonds. Particularly preferably, the monomer component (2) comprises at least one cross-linking monomer having three to five and especially three and/or four ethylenically unsaturated bonds.

Preferably, the monomer component (2) comprises a vinyl aromatic reactive diluent monomer and at least one of divinyl benzene and an acrylate having at least two (meth)acrylate groups selected as cross-linking monomer(s). Most preferably an acrylate having at least three and especially at least four (meth)acrylate groups may be included in addition to or as an alternative to the acrylate having two (meth)acrylate groups.

In a particularly preferred composition, the monomer component comprises a vinyl aromatic diluent monomer and at least one di(meth)acrylate together with at least one tri(meth)acrylate and/or tetra(meth)acrylate. Preferably the monomer component (2) comprises a combination of di(meth)acrylate selected from one or more of glycerol dimethacrylate, ethylene glycol dimethacrylate and tripropylene glycol diacrylate, together with at least one of a higher (meth)acrylate selected from tris(2-hydroxyethyl) isocyanurate triacrylate and pentaerythritol tetraacrylate. Such preferred combinations may be employed with a reactive diluent monomer selected from one or more of styrene and vinyl toluene.

More generally, in respect of the relative amounts of the reactive diluent monomer and the cross-linking monomer, the ratio, in terms of wt% based on the total weight of reactive diluent monomer and cross-linking monomer, of the reactive diluent monomer to the cross-linking monomer (including any such reactive diluent monomer and/or cross-linking monomer provided by the stoichiometric excess of the acrylate component or combination of acrylate components) is preferably in the range 10:90 to 50:50. More preferably the ratio is in the range 10:90 to 45:55. Most preferably the ratio is in the range 10:90 to 40:60.

Suitably at least 5wt% of the total weight of reactive diluent monomer and cross-linking monomer is provided by the stoichiometric excess of the total ethylenically unsaturated component (ii) which has a functional group for reaction with the isocyanate group, more preferably at least 7wt%, more preferably at least 9wt%, most preferably at least 10wt%. It is particularly preferred that about 10 to 12wt% is provided by the stoichiometric excess of an acrylate component having two (meth)acrylate groups. In preferred embodiments between 5wt% and 15wt% of component (2) is provided by an excess of glycerol dimethacrylate.

Similarly, the relative amounts of the functionalised isocyanate product (1) and the monomer component (2) (cross-linking monomer and reactive diluent monomer) may also influence the tensile and flexural properties of the cross-linked resin. Preferably the ratio of functionalised isocyanate product (1) to monomer component (2), in terms of wt% based on the total weight of functionalised isocyanate product and monomer component, is in the range 80:20 to 20:80. More preferably the ratio is in the range 70:30 to 30:70, more preferably 65:35 to 35:65 and most preferably in the range 60:40 to 40:60.

Conveniently the weight ratio of functionalised isocyanate product (1) to cross-linking components of monomer component (2) is in the range of 80:20 to 20:80, especially 70:30 to 30:70, suitably 65:35 to 35:65 and most preferably 60:40 to 40:60.

For the reaction to provide the functionalised isocyanate product, suitably the isocyanate component (i) and the ethylenically unsaturated component (ii) are reacted at a temperature in the range 50° to 100°C, more preferably 70 to 90°C. Most suitably the isocyanate component and the ethylenically unsaturated component are reacted at a temperature in the range 80 to 85°C.

Preferably the reaction between the isocyanate component (i) and the ethylenically unsaturated component (ii) is continued until the isocyanate content is less than 1%, preferably less than 0.5% and conveniently between 0.1 to 0.3% (as measured in accordance with the method discussed below in relation to the Examples).

Suitably, the process includes adding a catalyst to catalyse the reaction between the ethylenically unsaturated component (ii) and the isocyanate component (i) to provide a functionalised isocyanate product (1).

A preferred catalyst is a metal salt, more preferably a metal carboxylate. Tin catalysts are preferred, especially dibutyltin dilaurate.

Particularly preferred embodiments of the invention concern a crosslinkable composition suitable for moulding comprising:
(1) a urethane acrylate product which is the reaction product of:
   (i) an isocyanate component having 2, 3 or 4 isocyanate groups and which is derived from at least one of hexamethylene diisocyanate and isophorone diisocyanate, and
   (ii) a hydroxy functional tri(meth)acrylate and optionally also a stoichiometrically lesser amount of a hydroxy functional di(meth)acrylate; and
(2) a monomer component comprising a vinyl aromatic diluent monomer and a cross linking monomer which is one or more selected from a di(meth)acrylate and/or a tri(meth)acrylate and/or a tetra(meth)acrylate.

Specific example embodiments concern a crosslinkable composition suitable for moulding comprising:
(1) a urethane acrylate product which is the reaction product of:
   (i) an isocyanate component having 2, 3 or 4 isocyanate groups and which is derived from at least one of hexamethylene diisocyanate and isophorone diisocyanate, and
   (ii) at least one of pentaerythritol tri(meth)acrylate and dipentaerythritol penta(meth) acrylate; and
(2) a monomer component comprising vinyl aromatic reactive diluent monomer and a crosslinking monomer which includes one or more selected from: di(meth)acrylates (especially glycerol dimethacrylate and ethylene glycol dimethacrylate), tri(meth)acrylates (especially tris (2-hydroxyethyl)isocyanurate triacrylate) and tetra(meth)acrylates (especially pentaerythritol tetraacrylate).

Furthermore, the present invention provides a crosslinkable composition comprising:
(1) a urethane acrylate product which is the reaction product of:
   (i) an isocyanate component having 2, 3 or 4 isocyanate groups, and
   (ii) a hydroxy functional di- or higher (meth)acrylate; and
(2) a monomer component comprising a reactive diluent monomer and a crosslinking monomer which is a di- or higher (meth)acrylate;
wherein the composition, when cured, exhibits one or more of:
(a) an HDT of at least 260°C, especially at least 280°C; and/or
(b) an HDT of at least 60°C above the cure temperature, when cured at no more than 200°C.

A further aspect of the present invention concerns the provision of such a functionalised isocyanate product (1) as provided in the first aspect of the invention. The preferred features described in relation to the first aspect of the invention apply also to this aspect.

Embodiments of this aspect of the invention concern
(1) a functionalised isocyanate product which is the reaction product of
   (i) an isocyanate component having 2, 3 or 4 isocyanate groups and which is derived from at least one of hexamethylene diisocyanate and isophorone diisocyanate, and
   (ii) an ethylenically unsaturated component having at least one functional group that is reactive with the isocyanate group and at least three ethylenically unsaturated groups.

Preferred embodiments relate to
(1) a functionalised isocyanate product which is the reaction product of
   (i) an isocyanate component having 2, 3 or 4 isocyanate groups and which is derived from at least one of hexamethylene diisocyanate and isophorone diisoycanate, and
   (ii) a hydroxy functional tri- or higher (meth)acrylate, especially at least one of pentaerythritol tri(meth)acrylate and dipentaerythritol penta (meth)acrylate, optionally in combination with a stoichiometrically lesser amount of hydroxy di(meth)acrylate.

A particularly preferred functionalised isocyanate according to embodiments of the invention is one based on the reaction product of a trimer of isophorone diisocyanate and a combination of a hydroxy functional di- and tri-(meth)acrylates, especially pentaerythritol triacrylate and glycerol dimethacrylate.

A further preferred embodiment provides a functionalised isocyanate based on the reaction product of a uretidone modified 1,6-diisocyanatohexane which has an isocyanate functionality of between 2 and 3 and a combination of hydroxy functional di- and tri(meth)acrylates, especially pentaerythritol triacrylate and glycerol dimethacrylate.

Suitably, the moulding composition undergoes crosslinking by use of an initiator for initiating cross-linking of the functionalised isocyanate product. Thus, the initiator is a free radical initiator, i.e. it provides a source of free radicals to initiate free radical polymerisation. Appropriate initiators are those proposed for thermal curing (whether at ambient or elevated temperatures) rather than those which require UV activation.

Preferably the initiator includes at least one selected from a peroxide, a metal salt and an amine. Most preferably the initiator is in the form of a liquid.

Suitable initiators for room temperature curing include dibenzoyl peroxide, acetylacetone peroxide, cumene hydroperoxide and other methyl ethyl ketone peroxides known as medium and high reactivity MEKPs. For curing at elevated temperatures, example initiators include dibenzoyl peroxide, dicumyl peroxide, peresters and perketals.

Preferably the peroxide is selected from methyl ethyl ketone peroxide, t-butyl perbenzoate (for example, available as Trigonox C from Akzo Nobel).

Furthermore, benzoyl peroxide or cyclohexanone peroxide can be used with an amine accelerator such as dimethyl or diethyl aniline.

Preferably the metal salt is cobalt octoate.

Preferably the initiator comprises both methyl ethyl ketone peroxide and cobalt octoate.

As discussed above, moulding compositions of the present invention, are capable of providing crosslinked compositions which have an HDT of at least 260°C, as measured according to the protocol described in the Examples. More preferably they have an HDT of at least 265°C and most preferably at least 270°C and especially at least 280°C.

A further aspect of the present invention concerns a crosslinked resin derived from a moulding composition of the first aspect of the invention and which exhibits an HDT of at least 260°C, preferably at least 280°C, when cured at 200°C.

A still further aspect of the present invention concerns a crosslinked resin derived from a moulding composition of the first aspect of the invention which exhibits an HDT of at least 60°C and more preferably at least 70°C, especially 80°C, above the cure temperature.

Such crosslinked resins are especially suitable for reinforcement and use in moulding processes.

Thus, embodiments of the invention concern a crosslinkable moulding composition in accordance with the first aspect of the invention and which additionally comprises (3) a reinforcing component.

The reinforcing component preferably comprises fibre or other elongate material such as strands, ribbons, wires, whiskers or tubes.

Preferably the fibres or other elongate material are composed of inorganic material. Examples of suitable inorganic fibres include glass fibres and boron fibres.

Alternatively or additionally, organic fibres can be used, such as carbon fibres and Kevlar (sometimes known as Aramid) fibres.

Also suitable are natural fibres such as cellulosic fibres, including hemp fibre, sisal fibre, jute fibre, kenaf fibre and paper fibres.

Preferably the fibres are chopped fibres. Preferably the fibres are non-woven fibres, for example a non-woven mat.

Examples of so-called whiskers include graphite whiskers, silicon carbide whiskers, silicon nitride and the like.

Appropriate wires include metal wires, particularly high-strength steel wires and tungsten wires.

Carbon nanotubes are a preferred reinforcing component in the form of a tube.

However, the reinforcing component can also be in other forms. For example, glass can also be incorporated as glass flakes. Particulate fillers may also be used as reinforcement, examples being clay particles and nano-scale particles such as nano-silica, nano-titania and nano-silver.

Preferably the reinforcing component comprises fibres.

More preferably the reinforcing component comprises glass fibres, most preferably chopped glass fibres in the form of chopped strand mat. The said chopped strand mat may be of either the emulsion-bound or of the powder-bound type.

Preferably the reinforcing component is present in an amount of at least 10wt% or more, based on the total weight of the final reinforced resin. More preferably, the reinforcing component is present in an amount of at least 20wt%, more preferably at least 30wt% and most preferably at least 35wt%.

In a particularly preferred composition, the reinforcing component is glass fibre and is present in an amount of at least 30wt%, more preferably at least 35wt%.

In addition to the reinforcing component, the moulding composition may also include fillers and/or other conventional additives.

Preferably the composition also includes an inhibitor, to prevent unwanted or premature free radical reaction prior to the desired moulding process. Suitable inhibitors include quinones and substituted phenols. Particularly preferred example quinones include 2-methyl-1,4-benzoquinone, methylhydroquinones, 1,4 naphthaquinone, 1,4 benzoquinone, hydroquinone and mixtures thereof. Example preferred substituted phenols include 4-methoxyphenol, 4-tert-butyl-catechol and 4-methyl-2,6-di-tert-butyl phenol.

In practice, a cross-linkable moulding composition in accordance with the present invention is adapted to be used with a reinforcing component and may be supplied to end users who then add the desired reinforcing component.

The present invention is also concerned with kits comprising the various components needed in order to cure/cross-link the compositions.

Thus, in a further aspect, the present invention provides a kit comprising
(A)
   (1) a functionalised isocyanate product having at least six ethylenically unsaturated groups which is the reaction product of
      (i) an isocyanate component having an isocyanate functionality of two or more, and
      (ii) an ethylenically unsaturated component having at least one functional group that is reactive with an isocyanate group of the isocyanate component and at least two ethylenically unsaturated groups; and
   (2) a monomer component comprising a cross-linking monomer having at least two ethylenically unsaturated groups,
   wherein at least one of an ethylenically unsaturated component (ii) and/or a monomer component (2) are selected to have at least three ethylenically unsaturated groups;
   and
(B) a reinforcing component.

Suitably the kit further comprises (C) an initiator for initiating cross-linking of the functionalised isocyanate product. Thus, the initiator is a free radical initiator, i.e. it provides a source of free radicals to initiate free radical polymerisation. Typically, in use the initiator (C) is combined with the functionalised isocyanate product (1) and/or monomer component (2) of (A) and the thus-initiated resin is combined with the reinforcing component.

The kit may additionally comprise an inhibitor (D), as herein described, to inhibit premature free radical reaction. Again, generally this is included with component (A) containing the functionalised isocyanate product (1) and the monomer component (2).

The optional and preferred features of the first and any of the other aspects herein may also apply, singly or in any combination, to these aspects.

The present invention is also concerned with cross-linked resins, i.e. cross-linked resins of the compositions described above.

Thus, in a further aspect, the present invention provides a cross-linked resin comprising
(A) the cross-linked reaction product of
   (1) a functionalised isocyanate product having at least six ethylenically unsaturated groups which is the reaction product of
      (i) an isocyanate component having an isocyanate functionality of two or more, and
      (ii) an ethylenically unsaturated component having at least one functional group that is reactive with an isocyanate group of the isocyanate component and at least two ethylenically unsaturated groups; and
   (2) a monomer component comprising a cross-linking monomer having at least two ethylenically unsaturated groups,
   wherein at least one of an ethylenically unsaturated component (ii) and/or a monomer component (2) are selected to have at least three ethylenically unsaturated groups;
   and
(B) a reinforcing component.

The optional and preferred features of the first and any of the other aspects herein may also apply, singly or in any combination, to these aspects.

Preferably the cross-linked resin is in the form of a shaped article.

The present invention is also concerned with composite articles, particularly laminates, made from the reinforced compositions described herein.

Thus, in a further aspect, the present invention provides a composite article comprising at least one, optionally at least two layers of polymeric material, wherein at least one of the layers comprises (A) a cross-linked functionalised isocyanate resin, the cross-linked functionalised isocyanate resin being formed from
(1) a functionalised isocyanate product having at least six ethylenically unsaturated groups which is the reaction product of
   (i) an isocyanate component having an isocyanate functionality of two or more, and
   (ii) an ethylenically unsaturated component having at least one functional group that is reactive with an isocyanate group of the isocyanate component and at least two ethylenically unsaturated groups; and
(2) a monomer component comprising a cross-linking monomer having at least two ethylenically unsaturated groups,
wherein at least one of an ethylenically unsaturated component (ii) and/or a monomer component (2) are selected to have at least three ethylenically unsaturated groups;
and
(B) a reinforcing component.

The optional and preferred features of the first and any of the other aspects herein may also apply, singly or in any combination, to these aspects.

Preferably the composite article is a laminate.

Preferably the composition of a second layer of the composite article is different from the first layer.

Nevertheless, preferably, the second layer also comprises a cross-linked functionalised isocyanate product (A). Suitably, the second layer does not include a reinforcing component.

Preferably the composite article comprises at least 3 layers, more preferably at least 4 layers.

Each layer may itself comprise more than one layer. For example a glass fibre reinforced layer may comprise two or more layers of glass fibre reinforced resin. Such an arrangement may be produced by arranging the reinforcing component, e.g. glass fibres, in a series of layers and then cross-linking the resin. Alternatively, multiple layers may be built up by applying and then cross-linking each layer.

Also, any layer of a composite need not be of uniform composition throughout. For example a composite may include a layer which comprises one or more regions rich in reinforcement and one or more regions containing lower levels, or free of, reinforcement.

A preferred embodiment of a composite may comprise a single layer of cross-linked functionalised isocyanate resin which contains at least one region rich in reinforcement.

The present invention is also concerned with processes for making the products, compositions, resins and composite articles described herein.

Thus, in a further aspect, the present invention provides a process of making a cross-linkable moulding composition, the method comprising the steps of
(I) forming a functionalised isocyanate product (1) as defined herein from the reaction of
   an isocyanate component (i), and
   an ethylenically unsaturated component (ii); and
(II) adding to the reaction product of (1) a monomer component (2) comprising a cross-linking monomer having at least two ethylenically unsaturated groups.

The optional and preferred features of the first and any of the other aspects herein may also apply, singly or in any combination, to these aspects.

As discussed above, the monomer component (2) preferably includes, in addition to the cross-linking monomer, a reactive diluent monomer having at least one ethylenically unsaturated group.

Furthermore, in this aspect, the reactive diluent monomer is suitably added to the reaction mixture of the isocyanate component (i) and the ethylenically unsaturated component (ii). In other words it is added to the composition before or during the reaction of the isocyanate component and the ethylenically unsaturated component.

Thus, the process preferably includes the additional step of adding monomer component comprising a reactive diluent monomer to the reaction mixture of the isocyanate component (i) and the ethylenically unsaturated component (ii).

It has been found that such a reactive diluent monomer can reduce the viscosity of the reaction mixture, thereby assisting in bringing the reaction closer to completion. Furthermore, especially in the case where the ethylenically unsaturated component is an acrylate component, the reactive diluent monomer can then be subsequently incorporated into the urethane acrylate polymer by free radical polymerisation, preferably at the same time as the cross-linking monomer reacts to cross-link the urethane acrylate product.

Furthermore, the process may include the addition of at least some cross-linking monomer to the reaction mixture of isocyanate component (i) and ethylenically unsaturated component (ii).

For example, an ethylenically unsaturated component (ii) may be supplied as a mixture with at least some crosslinking monomer (2). A preferred example of this embodiment concerns the use of a hydroxy functional acrylate monomer as component (ii) which contains at least some acrylate monomer for subsequent crosslinking reaction.

Suitably the reaction steps (I) and (II) take place in the presence of a vinyl aromatic monomer, for example such as styrene (i.e. preferably step (I) includes providing styrene) which is then itself preferably reacted in a subsequent cross-linking step.

In a further related aspect, the present invention also provides the use of a functionalised isocyanate as defined herein in a method of making a crosslinkable moulding composition comprising a reinforcing component as defined herein.

Thus, in a preferred part of this aspect, the present invention provides the use of a crosslinkable moulding composition as defined herein in a method of making a cross-linked resin comprising a reinforcing component as defined herein.

The optional and preferred features of the first and any of the other aspects herein may also apply, singly or in any combination, to the present aspect.

As discussed above, the compositions supplied to manufacturers wishing to make a reinforced resin of the present invention might not include the reinforcing component, which can be added subsequently by the manufacturers. Thus, the present invention is also concerned with a process of making a crosslinkable moulding composition derived from afunctionalised isocyanate product which can be used with a reinforcing component, especially for impregnating a reinforcing component.

Thus, in a further aspect, the present invention provides a process of making a crosslinkable moulding composition in accordance with the first aspect of the invention, the method comprising the steps of
(I) forming a functionalised isocyanate product (1) from the reaction of
   an isocyanate component (i); and
   an ethylenically unsaturated component (ii), and
(II) adding to the reaction product of (1) a monomer component (2) comprising a cross-linking monomer having least two ethylenically unsaturated groups.

The optional and preferred features of the first and any of the other aspects herein may also apply, singly or in any combination, to these aspects.

In a further related aspect, the present invention also provides the use of a functionalised isocyanate product as defined herein in a method of making a crosslinkable moulding composition as defined herein which may be combined with a reinforcing component. Depending on the desired application the reinforcing component may be added to the crosslinkable composition, or the composition may be added to the reinforcing component.

As discussed above, the ethylenically unsaturated isocyanate product is preferably provided by an acrylate component, and most preferably a mixture of acrylate components.

Thus, in a preferred part of this aspect, the present invention provides the use of a urethane acrylate as defined herein in a method of making a crosslinkable urethane acrylate composition as defined herein which may be combined with a reinforcing component.

The optional and preferred features of the first and any of the other aspects herein may also apply, singly or in any combination, to the present aspect.

The present invention is also concerned with a process for making a reinforced crosslinked resin.

Thus, in a further aspect, the present invention provides a process of making a reinforced cross-linked resin, the method comprising the steps of
(I) forming a functionalised isocyanate product (1) from the reaction of
   an isocyanate component (i); and
   an ethylenically unsaturated component (ii);
(II) adding to the reaction product (1) a monomer component (2) comprising a cross-linking monomer having at least two ethylenically unsaturated groups;
(III) combining a reinforcing component with the mixture of (1) and (2); and
(IV) effecting the cross-linking reaction between the monomer component and the functionalised isocyanate product.

The optional and preferred features of the first and any of the other aspects herein may also apply, singly or in any combination, to these aspects.

The step (IV) of effecting the cross-linking reaction between the monomer component and the functionalised isocyanate product preferably employs a free radical initiator effective for thermal curing. Preferably the process includes a step (IIa) of adding initiator to the reaction product (1) and monomer component (2) just prior to incorporation of reinforcing component.

Preferably the initiator includes methyl ethyl ketone peroxide and cobalt octoate.

Preferably the process includes the additional step (V) curing the resin composition.

Suitably the step of curing the resin includes a curing stage and a post curing stage. Suitably the curing stage occurs at room temperature. A typical duration is 5 to 15 hours. For example, the resin may be left overnight to cure.

The present inventor has found that a post curing step can be beneficial in achieving high HDT and good tensile and flexural properties.

Suitably, the post curing stage comprises heating the resin composition at a temperature above 60°C, preferably above 70°C, more preferably above 75°C. A preferred temperature is about 80°C. Preferably the temperature is no more than 100°C.

Preferably, such post curing at elevated temperature occurs for at least 2 hours, preferably at least 4 hours. A preferred duration is about 5 hours.

Preferably the step of post curing comprises two stages of post curing.

The second stage of post curing is preferably at a temperature above 100°C, preferably above 150°C, more preferably above 180°C. A preferred temperature is about 200°C. Preferably the temperature is no more than 300°C.

The second stage of post curing occurs for at least 1 hour, preferably at least 2 hours. A preferred duration is about 3 hours.

Any combination of these temperatures and durations can be used in a two stage post curing step. However, suitably the first stage post curing is at a lower temperature than the second stage post curing. Suitably post curing during the first stage is for a longer time than the second stage.

In a preferred post curing step, the resin composition is post cured in a first stage at a temperature in the range 60 to 100°C for about 5 hours, followed by post curing in a second stage at a temperature in the range of 150 to 300°C for about 3 hours.

In a particularly preferred curing step, the resin composition is cured in a first stage at about 80°C for about 5 hours, followed by curing in a second stage at about 200°C for about 3 hours.

The present invention is also concerned with a process for cross-linking a "ready made" composition comprising a functionalised isocyanate product and a cross-linking monomer.

Thus, in a further, related, aspect, the present invention provides a process of making a cross-linked resin, the method comprising the steps of
(I) combining a reinforcing component, and a cross-linking initiator with a composition comprising
   (1) a functionalised isocyanate product, which product is the reaction product of
      an isocyanate component (i); and
      an ethylenically unsaturated component (ii); and
   (2) a monomer component comprising a cross-linking agent having at least two ethylenically unsaturated groups.

The present invention is also concerned with a process for making a composite article, optionally a laminate.

Thus, in a further aspect, the present invention provides a process of forming a composite article comprising the steps of
(A) forming a first layer composed of polymeric material, and
(B) forming a second layer comprising a cross-linked reinforced functionalised isocyanate resin formed from the cross-linked reaction product of
   (1) a functionalised isocyanate product being the reaction product of
      an isocyanate component (i); and
      an ethylenically unsaturated component (ii), and
   (2) a monomer component comprising a cross-linking monomer having at least two ethylenically unsaturated groups, wherein the resin includes a reinforcing component.

Preferably the composite article is a laminate.

Preferably the second layer is formed on or adjacent the first layer.

Preferably the second layer is formed by applying a urethane acrylate composition comprising the urethane acrylate product, the monomer component and the reinforcing component, and initiating the reaction between the urethane acrylate product and the monomer component.

Preferably the composite article is formed in a mold. Preferably steps (A) and/or (B) include forming the respective layers in a mold.

Preferably the composite article or cross linked resin is in the form of a shaped article.

Each of the aspects previously described may be combined with one, more than one or all of the other aspects and features within each of the aspects may be combined with features from the other aspects. Therefore, in a further aspect, the present invention provides a composition, product, composite article, process or use including one, more than one or all of the previous aspects.

Preferred embodiments will now be described in more detail, by way of example.

### Description of Embodiments of the Invention

### Materials and Methods

Vestanat T1890/100 is a proprietary trimer of isophorone diisocyanate available from Degussa GmbH. It has an isocyanate content of 17·3 ± 0·3% weight and an NCO functionality between 3 and 4.

Desmodur N3400 is a proprietary uretdione-modified 1,6-diisocyanatohexane available from Bayer AG. It has an isocyanate content of 21·8 ± 0·7% weight and an average NCO functionality of 2·5.

SR444D is a commercial grade of pentaerythritol triacrylate available from Sartomer Co. Inc.*

PETIA is an alternative commercial grade of pentaerythritol triacrylate, obtained from UCB S.A.*

*Both of these commercial products also contain pentaerythritol tetraacrylate as an impurity.

SR368 is a commercial grade of tris(2-hydroxyethyl) isocyanurate triacrylate available from Sartomer Co. Inc.

Fascat 4202HP is a proprietary tin-based reaction catalyst available from Atofina.

Butanox LPT is a proprietary methyl ethyl ketone peroxide available from Akzo Nobel.

Solution Q is a 33% wt solution of hydroquinone in diethylene glycol.

Accelerator G is a solution of cobalt (II) octoate in styrene available from Scott Bader Company Limited, the cobalt concentration being 1·00% wt.

Accelerator E is a solution of cobalt (II) octoate in styrene available from Scott Bader Company Limited, the cobalt concentration being 0·42% wt.

The isocyanate content of the reaction mixtures described, during processing, is determined by dissolving a small sample of the mixture (0·5 - 1·5g) in dry tetrahydrofuran, reacting the residual isocyanate with a metered quantity of di-n-butylamine and back-titrating the unreacted di-n-butylamine with 0·1M hydrochloric acid.

The gel time of the liquid resins described was measured at 25°C according to BS2782 Part 8 Method 835C (1980) using a Techne gel timer as the mechanised timing device. In this method, 100g of resin initiated with 2% Accelerator G plus 2% Butanox LPT and maintained at 25°C whilst the gel time is determined by means of a vertically moving plunger driven by the Techne gel timer.

ICI cone and plate viscosities of the liquid resins were measured at 25°C using a viscometer manufactured by Research Equipment (London) Limited, fitted with a 19·5mm cone rotating at 750rpm.

Heat deflection temperatures were determined according to the method of BS EN ISO 75-2 Method A (1996). In the preparation of the test pieces according to this Method, the liquid resins were cured with 2%wt Accelerator G plus 2%wt Butanox LPT, the cured specimens being left to stand at room temperature overnight before being post-cured as stated within the table of test results.

Glass reinforced laminates were prepared with four layers of 450gsm powder-bound chopped strand glass mat (Owens Corning grade M273A), the resin being once again initiated with 2%wt Accelerator G plus 2%wt Butanox LPT before lay-up of the laminates by hand. These laminates were left overnight at room temperature to cure, followed by post-cure for 5 hours at 80°C, then 3 hours at 200°C. Tensile properties of these laminates were measured using the method of BS EN ISO 527-4 (1997). Flexural properties were measured with the method of BS EN ISO 14125 (1998) Method A. (Chopped strand mat being a so-called coarse reinforcement, test specimens of 25mm width were used, as indicated by the Standard for coarse reinforcements.) Glass contents were determined using the method of EN 60 (1977).

### Example 1

Into a 2-litre, lidded round-bottomed flask equipped with reflux condenser, motorised anchor stirrer and temperature probe was charged 516·09g of Vestanat 1890/100, 226·26g of styrene, 0·48g of Fascat 4202HP and a mixture of inhibitors consisting of 0·60g of 1,4-naphthaquinone, 0·15g of 1,4·benzoquinone and 1·8g of Solution Q. This mixture was heated, with stirring, to a temperature between 80 and 85°C before commencing dropwise addition of 696·94g of Sartomer SR444D. This addition step lasted 100 minutes, the temperature being maintained between 80 and 85°C during this time. The reaction is exothermic, so variation of the addition rate is one means by which the maintenance of a steady batch temperature may be achieved. Once this addition was complete, the reaction mixture was stirred at 80-85°C for 30 minutes, until the isocyanate content had dropped to 1·45%. 253·21g of glycerol dimethacrylate was then added dropwise over 45 minutes, again maintaining the temperature in the flask between 80 and 85°C. After completion of this addition, the mixture was stirred at 80-85°C until the isocyanate content had dropped to 0·26%, which took approximately three hours. It was then cooled to below 40°C before addition of 306·55g of divinylbenzene (63% grade). The product was a liquid resin having a viscosity of 12·5 Poise at 25°C, as measured by ICI cone and plate viscometer, and a gel time of 16·8 minutes.

### Example 2

Into a 1-litre, lidded round-bottomed flask equipped with reflux condenser, motorised anchor stirrer and temperature probe was charged 212·76g of Desmodur N3400, 112·09g of styrene, 0·24g of Fascat 4202HP and a mixture of inhibitors consisting of 0·30g of 1,4·naphthaquinone, 0·075g of 1,4·benzoquinone and 0·9g of Solution Q. This mixture was heated, with stirring, to a temperature between 80 and 85°C before commencing dropwise addition of 393·75g of PETIA. This addition step lasted 70 minutes, the temperature being maintained between 80 and 85°C during this time. Once this addition was complete, the reaction mixture was stirred at 80-85°C for 35 minutes, until the isocyanate content had dropped to 2·00%. 126·60g of glycerol dimethacrylate was then added dropwise over 40 minutes, again maintaining the temperature in the flask between 80 and 85°C. After completion of this addition, the mixture was stirred at 80-85°C until the isocyanate content had dropped to 0·11%, which took approximately two and a half hours. It was then cooled to below 40°C before addition of 153·28g of divinylbenzene (63% grade). The product was a liquid resin having a viscosity of 6·4 Poise at 25°C, as measured by ICI cone and plate viscometer, and a gel time of 8·3 minutes.

### Comparative Example C1

Into a 1-litre, lidded round-bottomed flask equipped with reflux condenser, motorised anchor stirrer and temperature probe was charged 265·618g of isophorone diisocyanate, 158·263g of styrene and a mixture of inhibitors consisting of 0·3g of 1,4-naphthaquinone, 0·075g of 1,4-benzoquinone and 0·9g of Solution Q. This mixture was heated, with stirring, to a temperature between 80 and 85°C. 0·24g of Fascat 4202HP was then added before commencing dropwise addition of 284·762g of 2-hydroxyethylacrylate. This addition step lasted 35 minutes, the temperature being maintained between 80 and 85°C during this time. Once the addition was complete, the reaction mixture was stirred at 80-85°C until the isocyanate content had dropped to 0·07%, which took approximately three hours. Then it was cooled to below 40°C before addition of 137·806g of glycerol dimethacrylate and 152·036g of divinylbenzene (63% grade).

The product liquid resin had a viscosity of 0·7 Poise at 25°C, and a gel time of 27·3 minutes.

### Comparative Example C2

This is Crystic PD7952PA, an isophthalic polyester laminating resin commercially available from Scott Bader Company Limited.

Specimens for the measurement of heat deflection temperatures were prepared as described earlier under "Materials and Methods". HDTs were measured following each of two postcure cycles. Under postcure A, having left the specimens overnight at room temperature, they were then subjected to 5 hours at 80°C in an oven, followed by a further 3 hours at 200°C. Postcure B was similar, but the 5 hours at 80°C was followed in this case by 3 hours at 250°C rather than at 200°C. The resultant HDTs are set out in Table I.

**Table I**

| **EXAMPLE** | **POSTCURE A** | **POSTCURE B** |
|---|---|---|
| Example 1 | >290°C | >290°C |
| Example 2 | 282°C | Not determined |
| Comparative example C1 | 161°C | Not determined |
| Comparative Example C2 | 166°C | Specimen shattered |

In the case of Example 1, the HDTs of the test specimens prepared using each postcure cycle exceeded the top limit of the measurement equipment. The applicant, sadly, is not aware of an alternative test rig capable of measuring HDTs greater than this top limit of 290°C. Even so, the table clearly shows that examples 1 and 2 (according to the invention) achieve HDTs after a 200°C postcure that significantly exceed that of even the comparative examples.

Glass reinforced laminates were prepared according to the procedure described earlier under "Materials and Methods" Their tensile and flexural properties were evaluated by means of the standard methods there referred to. These are set out in Table II.

**Table II**

| **EXAMPLE** | | **EXAMPLE 1** | **COMPARATIVE EXAMPLE C1** | **COMPARATIVE EXAMPLE C2** |
|---|---|---|---|---|
| GLASS CONTENT (% wt.) | | 31·8 | 37.0 | 32·6 |
| TENSILE PROPERTIES | T. Strength (MPA) | 85·7 | 129.5 | 88·3 |
| | T. Modulus (GPA) | 6·45 | 10.60 | 7·12 |
| | Elongation at break (%) | 2·29 | 2.01 | 2·20 |
| FLEXURAL PROPERTIES | F. Strength (MPA) | 162·4 | 270.0 | 167·6 |
| | F. Modulus (GPA) | 6·80 | 7.34 | 7·44 |
| | Strain to failure (%) | 3·48 | 3.66 | 2·99 |

The results show that the mechanical properties of the inventive example are not compromised in the achievement of a higher HDT over and above those of the comparative materials of the known art. Indeed, a comparison of the strength and modulus figures of example 1 with those of comparative example C1 reveal an interesting and surprising feature. Were the increase in HDT of example 1 over that of comparative example C1 solely due to an increase in crosslink density of the cured material, conventional wisdom would predict that the said higher crosslink density would render example 1 more brittle. This embrittlement would be revealed in higher modulus and lower strength. In actuality, example 1 demonstrates lower moduli than comparative example C1 both under tension and (especially) flexure.

In order to evaluate the performance of the inventive technology in different crosslinkable monomer systems, two masterbatch concentrate versions of the urethane (meth)acrylate oligomer of example 1 were prepared, one in styrene and one in vinyl toluene. These masterbatches were then diluted with different combinations of copolymerisable monomers.

### Masterbatch Example M1

Into a 1-litre, lidded round-bottomed flask equipped with reflux condenser, motorised anchor stirrer and temperature probe was charged 291·14g of Vestanat T1890/100, 133·45g of styrene, 0·28g of Fascat 4202HP and a mixture of inhibitors consisting of 0·35g of 1,4-naphthaquinone, 0·045g of 1,4·benzoquinone and 1·06g of Solution Q. This mixture was heated, with stirring, to a temperature between 80 and 85°C before commencing dropwise addition of 426·22g of PETIA. This addition step lasted 30 minutes, the temperature being maintained between 80 and 85°C during this time. Once this addition was complete, the reaction mixture was stirred at 80-85°C for two hours, until the isocyanate content had dropped to 2·14%. 147·45g of glycerol dimethacrylate was then added dropwise over 25 minutes, again maintaining the temperature in the flask between 80 and 85°C. After completion of this addition, the mixture was stirred at 80-85°C until the isocyanate content had dropped to 0·38%, which took approximately four and a half hours. It was then cooled and decanted for further dilution later.

### Masterbatch Example M2

Into a 1-litre, lidded round-bottomed flask equipped with reflux condenser, motorised anchor stirrer and temperature probe was charged 291·14g of Vestanat T1890/100, 133·45g of vinyl toluene, 0·28g of Fascat 4202HP and a mixture of inhibitors consisting of 0·35g of 1,4-naphthaquinone, 0·045g of 1,4·benzoquinone and 1·06g of Solution Q.

This mixture was heated, with stirring, to a temperature between 80 and 85°C before commencing dropwise addition of 426·22g of PETIA. This addition step lasted 60 minutes, the temperature being maintained between 80 and 85°C during this time. Once this addition was complete, the reaction mixture was stirred at 80-85°C for 45 minutes, until the isocyanate content had dropped to 2·17%. 147·45g of glycerol dimethacrylate was then added dropwise over 30 minutes, again maintaining the temperature in the flask between 80 and 85°C. After completion of this addition, the mixture was stirred at 80-85°C until the isocyanate content had dropped to 0·34%, which took approximately five and a half hours. It was then cooled and decanted for further dilution later.

### Examples 3 - 7

The two masterbatch examples above were diluted with different copolymerisable monomers, in the proportions by weight shown in Table III below, to prepare examples 3 - 7. The table also shows the oligomer contents of the finished resin compositions thus prepared, and the HDTs of the cured materials. These HDTs were obtained by curing the test specimens with 2% Butanox LPT plus 5% Accelerator E. After leaving overnight at room temperature, the specimens were postcured for 5 hours at 80°C followed by 3 hours at 200°C (i.e. Postcure A).

**Table III**

| **EXAMPLE** | **3** | **4** | **5** | **6** | **7** |
|---|---|---|---|---|---|
| Masterbatch example M1 | 85·0 | 70·0 | 75·0 | - | - |
| Masterbatch example M2 | - | - | - | 70·0 | 85-0 |
| Ethylene glycol dimethacrylate | 15·0 | 15·0 | - | 30·0 | - |
| Sartomer SR368 | - | 15·0 | - | - | - |
| Tripropylene glycol diacrylate | - | - | 15·0 | - | - |
| Divinylbenzene (63% grade) | - | - | 10·0 | - | 15·0 |
| OLIGOMER CONTENT (%) | 52·8 | 43·5 | 46·6 | 43·5 | 52·8 |
| HDT (°C) | 286 | >290 | 282 | >290 | >290 |

For the purpose of comparison, examples 1 and 2 have oligomer contents of 55·0% and 51·6% respectively, whilst comparative example C1 has an oligomer content of 54·3%. The polyester polymer content of comparative example C2 is typically about 57%.

Quite clearly, a variety of both multifunctional (meth)acrylate monomers and vinylaromatic monomers can be used within the invention to obtain heat deflection temperatures above 280°C, usually above 290°C, much in excess of those of the known art.

The weight ratios of the oligomers and copolymerisable monomers employed in the illustrative examples are summarised in Table IV.

**Table IV**

| **Example** | **1 Vestanat Sartomer** | **2 Desmodur PETIA** | **3** | **4** | **5** | **6** | **7** |
|---|---|---|---|---|---|---|---|
| Oligomer: (Iso) (PETIA) (GdMa) | 55.0 | 51.6 | 52.8 | 43.5 | 46.6 | 43.5 | 52.8 |
| Pentaerythritol Tetraacrylate (1) | 13.8 | 17.4 | 16.0 | 13.2 | 14.1 | 13.2 | 16.0 |
| Glycerol dimethacrylate | 4.6 | 4.4 | 4.8 | 4.0 | 4.3 | 4.0 | 4.8 |
| Styrene | 11.3 | 11.2 | 11.4 | 9.3 | 10.0 | - | - |
| Vinyl Toluene | - | - | - | - | - | 93.3 | 11.4 |
| DVB: (DVB) (EVB) | 15.3 | 15.4 | - | - | 10.0 | - | 15.0 |
| Ethylene glycol dimethacrylate | - | - | 15.0 | 15.0 | - | 30.0 | - |
| Tripropylene glycol diacrylate | - | - | - | - | 15.0 | - | - |
| Tris(2/hydroxyethyl) isocyanurate triacrylate | - | - | - | 15.0 | - | - | - |

| | | | | | | | |
|---|---|---|---|---|---|---|---|
| Key: (Iso) = Isocyanate, Vestanat T1890 or Desmodur N3400. Molar ratios of the oligomer, Isocyanate = 1.0 (PETIA) = Pentaerythritol Triacrylate PETIA =2.0 (GdMa) = Glycerol dimethacrylate GdMa =1.6 (DVB) = Divinyl benzene (EVB) = Ethyl vinyl benzene Notes: 1) This is pentaerythritol **tetra**acrylate which is a substantial component of those monomers. | | | | | | | |

## Claims

1. A crosslinkable moulding composition comprising:
(1) a functionalised isocyanate product having at least six ethylenically unsaturated groups which is the reaction product of
(i) an isocyanate component having an isocyanate functionality of two or more, and
(ii) an ethylenically unsaturated component having at least one functional group that is reactive with an isocyanate group of the isocyanate component and at least two ethylenically unsaturated groups; and
(2) a monomer component comprising a vinyl aromatic reactive diluent monomer and a cross-linking monomer having at least two ethylenically unsaturated groups,
wherein at least one of an ethylenically unsaturated component (ii) and/or a cross-linking monomer component (2) are selected to have at least three ethylenically unsaturated groups.

2. A crosslinkable moulding composition according to claim 1 wherein the reactive diluent monomer is a vinyl aromatic monomer and preferably at least one selected from styrene, methyl styrene, ethyl styrene, halogenated styrene and vinyl toluene.

3. A crosslinkable moulding composition according to claim 1 or 2, wherein the isocyanate component (i)is selected from one or more of the following (A) to (F):
(A) an isocyanate component that contains isocyanurate trimer residues of formula (I): 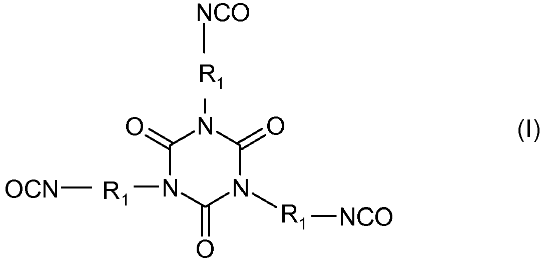 wherein R₁ in formula (I) is a divalent organic group selected from an aliphatic alkylene group, a cycloaliphatic alkylene group, an arylene group and an alkarylene group;
(B) an isocyanate component that contains iminooxadiazine dione trimer residues of formula (II): 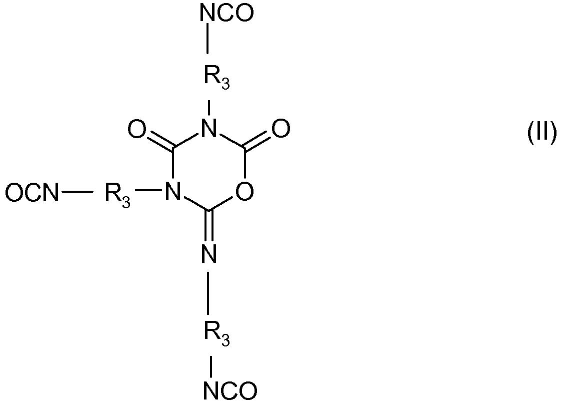 wherein R₃ in formula (II) is a divalent organic group selected from an aliphatic alkylene group, a cycloaliphatic alkylene group, an arylene group and an alkarylene group;
(C) an isocyanate component that contains uretidone dimer residues of formula (III): 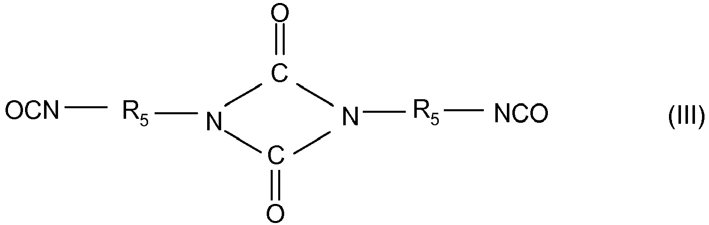 wherein R₅ in formula (III) is a divalent organic group selected from an aliphatic alkylene group, a cycloaliphatic alkylene group, an arylene group and an alkarylene group;
(D) an isocyanate component that is derived from an alkylene diisocyanate having from 4 to 12 carbon atoms in the alkylene chain and has an isocyanate functionality of from 2 to 3.5, and preferably is derived from hexamethylene diisocyanate;
(E) an isocyanate component that is derived from a cyclo aliphatic diisocyanate and has an isocyanate functionality of 2 to 4, and preferably is derived from isophorone diisocyanate and has an isocyanate functionality of 3 to 4; and
(F) an isocyanate component that is derived from a hydrogenated aromatic isocyanate, and preferably selected from hydrogenated diphenylmethane diisocyanate (hydrogenated MDI),
hydrogenated toluene diisocyanate (hydrogenated TDI),
hydrogenated tetramethylxylylene diisocyanate (h-TMXDI), or
hydrogenated polymethylene polyphenyl
diisocyanate (hydrogenated PAPI), each preferably having a functionality of from 2 to 3.5.

4. A crosslinkable moulding composition according to any preceding claim, wherein an ethylenically unsaturated component (ii) is selected to have three or more ethylenically unsaturated groups,the functional group of an ethylenically unsaturated component (ii) that is reactive with the isocyanate group of the isocyanate component is a hydroxyl-functional group and the ethylenically unsaturated groups are (meth)acrylate groups, and preferably the ethylenically unsaturated component is selected from one or more of the following (A) and (B):
(A) ethylenically unsaturated component (ii) that includes a hydroxyfunctional tri(meth)acrylate; and /or
(B) an ethylenically unsaturated component that includes one or more of:
pentaerythritol tri(meth)acrylate and
dipentaerythritol penta(meth)acrylate.

5. A crosslinkable moulding composition according to any preceding claim, wherein the ethylenically unsaturated component (ii) comprises a combination of two or more components selected from at least one of the following (A) to (D):
(A) a combination of:
(iia) an ethylenically unsaturated component having from 3 to 5 ethylenically unsaturated groups, and
(iib) an ethylenically unsaturated component having 1 or 2 ethylenically unsaturated groups;
(B) a combination of:
(iia) an acrylate component having from 3 to 5 (meth)acrylate groups, and
(iib) an acrylate component having 2 (meth)acrylate groups;
(C) a combination of:
(iia) a hydroxyfunctional tri(meth)acrylate and/or a hydroxyfunctional tetra(meth)acrylate, and
(iib) a hydroxyfunctional di(meth)acrylate; and
(D) a combination according to one of (A) to (C) wherein the mol ratio of components (iia) to (iib) is 80:20 to 20:80, preferably 75:25 to 25:75, more preferably 70:30 to 30:70 especially 65:35.

6. A crosslinkable moulding composition according to any preceding claim, wherein the ethylenically unsaturated component (ii) includes at least one selected from trimethylol propane di(meth)acrylate and glycerol di(meth)acrylate and preferably wherein the ethylenically unsaturated component (ii) comprises (iia) pentaerythritol triacrylate and (iib) glycerol dimethacrylate.

7. A crosslinkable moulding composition according to any preceding claim, wherein a crosslinking monomer of monomer component (2) comprises at least one selected from di- or higher vinyl and a di- or higher meth(acrylate)and preferably includes at least one selected from divinyl benzene; a hydroxyl-functional di meth)acrylate, glycerol di(meth)acrylate, trimethylolpropane di(meth)acrylate, pentaerythritol tri(meth)acrylate and dipentaerythritol penta(meth)acrylate; di and polyfunctional (meth)acrylates that do not have a hydroxyl group, ethylene glycol di(meth)acrylate, diethylene glycol di(meth)acrylate, dipropylene glycol di(meth)acrylate 1,3-butanediol di(meth)acrylate, 1,4-butanediol di(meth)acrylate, 1,6-hexanediol di(meth)acrylate, trimethylolpropane tri(meth)acrylate and pentaerythritol tetra(meth)acrylate; and ethoxylated or propoxylated versions of the above mentioned (meth)acrylates, ethoxylated trimethylolpropane tri(meth)acrylate, ethoxylated pentaerythritol tetra(meth)acrylate, ethoxylated bisphenol A di(meth)acrylate, propoxylated trimethylolpropane tri(meth)acrylate), and propoxylated glycerol tri(meth)acrylate.

8. A crosslinkable moulding composition according to claim 7, wherein the crosslinking monomer component (2) is selected from one or more of the following (A) to (D):
(A) the crosslinking monomer component (2) includes one or more selected from glycerol di(meth)acrylate, divinyl benzene, ethylene glycol di(meth)acrylate and tripropylene glycol di(meth)acrylate;
(B) the crosslinking monomer component (2) includes a monomer having at least 3 and up to 8, preferably up to 6 ethylenically unsaturated groups;
(C) the crosslinking monomer component (2) includes one or more selected from pentaerythritol tetra(meth)acrylate, dipentaerythritol hexa(meth)acrylate, trimethylol propane triacrylate, tris(2-hydroxyethyl) isocyanurate triacrylate and ethoxylated and propoxylated versions of the above; and
(D) at least some of the crosslinking monomer component (2) is provided by a stoichiometric excess of ethylenically unsaturated component (ii).

9. A crosslinkable moulding composition according to any preceding claim, wherein (i) the ratio, in terms of wt% based on the total weight of reactive diluent monomer and cross-linking monomer, of the reactive diluent monomer to the cross-linking monomer is in the range of 10:90 to 50:50, especially
10:90 to 45:55, particularly
10:90 to 40:60; and / or
(ii) the ratio of functionalised isocyanate product to monomer component, in terms of weight percent based on the total weight of functionalised isocyanate product and monomer component, is in the range 80:20 to 20:80, especially 70:30 to 30:70, suitably in the range 65: 35 to 35:65 and preferably in the range 60:40 to 40:60.

10. A crosslinkable moulding composition according to any preceding claim, which additionally comprises
(3) a reinforcing component which is preferably selected from one or more of the following (i) to (vii):
(i) the reinforcing component comprises at least one selected from fibres, strands, ribbons, wires, whiskers and tubes; and/or
(ii)the reinforcing component is composed of inorganic material; and/or
(iii) the reinforcing component is composed of inorganic fibres, preferably glass fibres; and/or
(iv) the reinforcing component is composed of chopped fibres; and/or
(v) the reinforcing component includes non woven fibres; and/or
(vi)wherein the fibres comprise a non woven mat; and/or
(vii) the reinforcing component is composed of fibres, wherein the fibres are in the form of a powder-bound chopped strand mat.

11. A crosslinkable moulding composition according to any preceding claim, wherein the composition, when cured, exhibits at least one of the following (A) to (C):
(A) an HDT of at least 260°C, suitably at least 265°C, especially at least 270°C, preferably 280°C or more;
(B) an HDT at least 60°C higher than the cure temperature;
(C) an HDT of at least 270° when cured at 200°C.

12. A cross-linked resin derived from a composition as claimed in any one of claims 1 to 11 and (3) a reinforcing component.

13. A process of making a crosslinkable moulding composition as claimed in any one of claims 1 to 11, the process including the steps of:
(1) forming a functionalised isocyanate product from the reaction of
(i) an isocyanate component having an isocyanate functionality of 2 or more; and
(ii) an ethylenically unsaturated component having at least one functional group that is reactive with an isocyanate group of the isocyanate component and at least two ethylenically unsaturated groups;
(2) combining the reaction product of (1) with a monomer component comprising a crosslinking monomer having at least 2 ethylenically unsaturated groups, provided that at least one of an ethylenically unsaturated component (ii) and/or a monomer component (2) are selected to have at least 3 ethylenically unsaturated groups; and optionally
(3) combining a reinforcing component with the mixture of (1) and (2), wherein the functionalised isocyanate product (1) and/or monomer component (2) are as defined in any one of claims 1 to 9 and which process optionally includes one or more of the following steps (A) to (E) :
(A) wherein the monomer component includes, in addition to the crosslinking monomer, a vinyl aromatic reactive diluent monomer having at least 1 ethylenically unsaturated group and the process includes the step of adding monomer component comprising a reactive diluent monomer to the reaction mixture of the isocyanate component and the ethylenically unsaturated component, optionally before or during reaction of isocyanate component and ethylenically unsaturated component;
(B) wherein the ethylenically unsaturated component is provided in stoichiometric excess with respect to the isocyanate groups of the isocyanate component;
(C) wherein the isocyanate component and the ethylenically unsaturated component are reacted at a temperature in the range of 50 to 100°C, preferably in the range of 70 to 90°C;
(D) wherein the reaction between the isocyanate component and the or each ethylenically unsaturated component is continued until the isocyanate content is less than 1%, optionally until the isocyanate content is less than 0.5%, and
(E) wherein a catalyst is used in the step of forming the functionalised isocyanate product, optionally wherein the catalyst is dibutyltindilaurate.

14. A process of making a reinforced cross-linked resin, the process including the steps of
(I) forming a crosslinkable functionalised isocyanate product from the reaction of
a functionalised isocyanate product having at least six ethylenically unsaturated groups which is the reaction product of
(i) an isocyanate component having an isocyanate functionality of two or more, and
(ii) an ethylenically unsaturated component having at least one functional group that is reactive with an isocyanate group of the isocyanate component and at least two ethylenically unsaturated groups; and
(II) combining the reaction product of (1) with a monomer component comprising a cross-linking monomer having at least two ethylenically unsaturated groups, provided that at least one of an ethylenically unsaturated component (ii) and/or monomer component (2) are selected to have at least three ethylenically unsaturated groups;
(III) combining a reinforcing component with the mixture of (1) and (2); and
(IV) effecting the crosslinking reaction between the monomer component and the functionalised isocyanate product; and optionally
(V) curing the resin composition;
wherein (i) the isocyanate component, (ii) ethylenically unsaturated component, (2) monomer component and (3) reinforcing component are as defined in any one of claims 1 to 10, and wherein the step of curing the resin preferably includes one or more of the following (i) to (ix) :
(i) the curing step includes a curing stage and a post curing stage; and/or
(ii) a curing stage occurs at room temperature; and/or
(iii) the duration of a curing stage is 5 to 15 hours; and/or
(iv) a post curing stage comprises heating the resin composition at a temperature above 60°C; and/or
(v) the duration of a post curing stage is at least 2 hours; and/or
(vi) the step of post curing comprises two stages of post curing; and/or
(vii) a second stage of post curing is at a temperature above 100°C; and/or
(viii) the duration of a second stage of post curing is at least one hour; and / or
(ix) the resin composition is post cured in a first stage at a temperature in the range of 60 to 100°C for 5 hours, followed by post curing in the second stage at a temperature in the range of 150 to 300°C for 3 hours.

15. A process of making a crosslinked resin, the process comprising the step of combining a cross-linking initiator and optionally also reinforcing component with a composition comprising a functionalised isocyanate product (1) and a monomer component (2) as defined in any one of claims 1 to 9.

16. A shaped article obtained by moulding a composition as claimed in any one of claims 1 to 11.

## Patentansprüche

1. Vernetzbare Formzusammensetzung, die Folgendes umfasst:
(1) ein funktionalisiertes Isocyanatprodukt mit zumindest sechs ethylenisch ungesättigten Gruppen, das das Reaktionsprodukt von Folgendem ist:
(i) einer Isocyanatkomponente mit einer Isocyanatfunktionalität von zwei oder mehr, und
(ii) einer ethylenisch ungesättigten Komponente mit zumindest einer mit einer Isocyanatgruppe der Isocyanatkomponente reaktiven funktionellen Gruppe und zumindest zwei ethylenisch ungesättigten Gruppen; und
(2) eine Monomerkomponente, die ein Vinylaromaten-Reaktivverdünner-Monomer und ein Vernetzermonomer mit zumindest zwei ethylenisch ungesättigten Gruppen umfasst,
wobei zumindest eine aus einer ethylenisch ungesättigten Komponente (ii) und/oder einer Vernetzermonomerkomponente (2) so gewählt ist, dass sie zumindest drei ethylenisch ungesättigte Gruppen aufweist.

2. Vernetzbare Formzusammensetzung nach Anspruch 1, worin das Reaktivverdünner-Monomer ein Vinylaromaten-Monomer und vorzugsweise zumindest ein aus Styrol, Methylstyrol, Ethylstyrol, halogeniertem Styrol und Vinyltoluol ausgewähltes ist.

3. Vernetzbare Formzusammensetzung nach Anspruch 1 oder 2, worin die Isocyanatkomponente (i) aus einer oder mehreren der folgenden (A) bis (F) ausgewählt ist:
(A) einer Isocyanatkomponente, die Isocyanurattrimer-Reste der Formel (I) enthält: 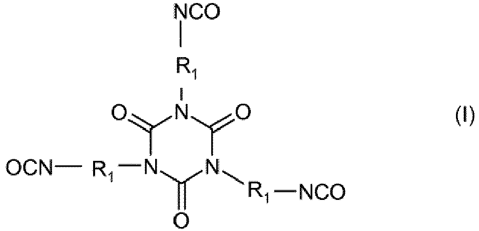 wobei R₁ in Formel (I) eine aus einer aliphatischen Alkylengruppe, einer cycloaliphatischen Alkylengruppe, einer Arylengruppe und einer Alkarylengruppe ausgewählte, zweiwertige organische Gruppe ist;
(B) einer Isocyanatkomponente, die Iminooxadiazindiontrimer-Reste der Formel (II) enthält: 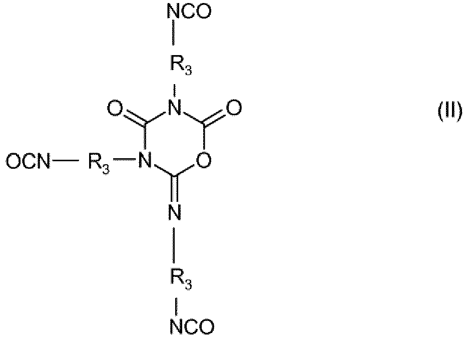 wobei R₃ in Formel (II) eine aus einer aliphatischen Alkylengruppe, einer cycloaliphatischen Alkylengruppe, einer Arylengruppe und einer Alkarylengruppe ausgewählte, zweiwertige organische Gruppe ist;
(C) einer Isocyanatkomponente, die Uretidondimerreste der Formel (III) enthält: 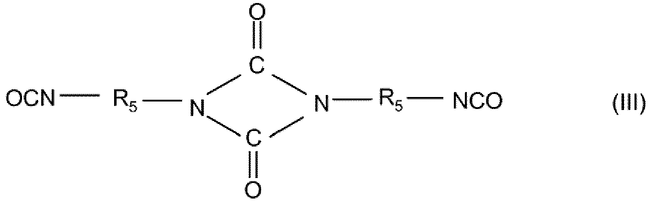 wobei R₅ in Formel (III) eine aus einer aliphatischen Alkylengruppe, einer cycloaliphatischen Alkylengruppe, einer Arylengruppe und einer Alkarylengruppe ausgewählte, zweiwertige organische Gruppe ist;
(D) einer Isocyanatkomponente, die von einem Alkylendiisocyanat mit 4 bis 12 Kohlenstoffatomen in der Alkylenkette abgeleitet ist und eine Isocyanatfunktionalität von 2 bis 3,5 aufweist und vorzugsweise von Hexamethylendiisocyanat abgeleitet ist;
(E) einer Isocyanatkomponente, die von einem cycloaliphatischen Diisocyanat abgeleitet ist und eine Isocyanatfunktionalität von 2 bis 4 aufweist und vorzugsweise von Isophorondiisocyanat abgeleitet ist und eine Isocyanatfunktionalität von 3 bis 4 aufweist; und
(F) einer Isocyanatkomponente, die von einem hydrierten aromatischen Isocyanat abgeleitet ist und vorzugsweise aus
hydriertem Diphenylmethandiisocyanat (hydriertem MDI),
hydriertem Toluoldiisocyanat (hydriertem TDI),
hydriertem Tetramethylxylylendiisocyanat (h-TMXDI) oder
hydriertem Polymethylenpolyphenyldiisocyanat (hydriertem PAPI) ausgewählt ist, die jeweils vorzugsweise eine Funktionalität von 2 bis 3,5 aufweisen.

4. Vernetzbare Formzusammensetzung nach einem der vorangegangenen Ansprüche, worin die ethylenisch ungesättigte Komponente (ii) so gewählt ist, dass sie drei oder mehr ethylenisch ungesättigte Gruppen aufweist, die mit der Isocyanatgruppe der Isocyanatkomponente reaktive funktionelle Gruppe der ethylenisch ungesättigten Komponente (ii) eine hydroxyfunktionelle Gruppe ist und die ethylenisch ungesättigten Gruppen (Meth)acrylatgruppen sind und vorzugsweise die ethylenisch ungesättigte Komponente aus einer oder mehreren der folgenden (A) und (B) ausgewählt ist:
(A) einer ethylenisch ungesättigten Komponente (ii), die ein hydroxyfunktionelles Tri(meth)acrylat umfasst; und/oder
(B) einer ethylenisch ungesättigten Komponente, die eine oder mehrere der Folgenden umfasst:
Pentaerythrittri(meth)acrylat und
Dipentaerythritpenta(meth)acrylat.

5. Vernetzbare Formzusammensetzung nach einem der vorangegangenen Ansprüche, worin die ethylenisch ungesättigte Komponente (ii) eine Kombination aus zwei oder mehreren Komponenten umfasst, die aus zumindest einer der folgenden (A) bis (D) ausgewählt sind:
(A) einer Kombination aus:
(iia) einer ethylenisch ungesättigten Komponente mit 3 bis 5 ethylenisch ungesättigten Gruppen, und
(iib) einer ethylenisch ungesättigten Komponente mit 1 oder 2 ethylenisch ungesättigten Gruppen;
(B) einer Kombination aus:
(iia) einer Acrylatkomponente mit 3 bis 5 (Meth)acrylatgruppen, und
(iib) einer Acrylatkomponente mit 2 (Meth)acrylatgruppen;
(C) einer Kombination aus:
(iia) einem hydroxyfunktionellen Tri(meth)acrylat und/oder einem hydroxyfunktionellen Tetra(meth)acrylat, und
(iib) einem hydroxyfunktionellen Di(meth)acrylat; und
(D) einer Kombination gemäß einer von (A) bis (C), worin das Molverhältnis der Komponenten (iia) bis (iib) 80:20 bis 20:80, vorzugsweise 75:25 bis 25:75, noch bevorzugter 70:30 bis 30:70, insbesondere 65:35, beträgt.

6. Vernetzbare Formzusammensetzung nach einem der vorangegangenen Ansprüche, worin die enthylenisch ungesättigte Komponente (ii) zumindest eines ausgewählt aus Trimethylolpropandi(meth)acrylat und Glycerindi(meth)acrylat umfasst und vorzugsweise worin die ethylenisch ungesättigte Komponente (ii) (iia) Pentaerythrittriacrylat und (iib) Glycerindimethacrylat umfasst.

7. Vernetzbare Formzusammensetzung nach einem der vorangegangenen Ansprüche, worin das Vernetzermonomer der Monomerkomponente (2) zumindest eines ausgewählt aus Di- oder höherem Vinyl und einem Di- oder höheren Meth-(acrylat) umfasst und vorzugsweise zumindest eines ausgewählt aus Divinylbenzol; einem hydroxyfunktionellen Di(meth)acrylat, Glycerindi(meth)acrylat, Trimethylolpropandi(meth)acrylat, Pentaerythrittri(meth)acrylat und Dipentaerythritpenta(meth)-acrylat; Di- und polyfunktionellen (Meth)acrylaten ohne Hydroxylgruppen, Ethylenglykoldi(meth)acrylat, Diethylenglykoldi(meth)acrylat, Dipropylenglykoldi(meth)acrylat, 1,3-Butandioldi(meth)acrylat, 1,4-Butandioldi(meth)acrylat, 1,6-Hexandioldi(meth)-acrylat, Trimethylolproprantri(meth)acrylat und Pentaerythrittetra(meth)acrylat; und ethoxylierten oder propoxylierten Versionen der oben genannten (Meth)acrylate, ethoxyliertem Trimethylolpropantri(meth)acrylat, ethoxyliertem Pentaerythrittetra(meth)-acrylat, ethoxyliertem Bisphenol-A-di(meth)acrylat, propoxyliertem Trimethylolpropantri(meth)acrylat und propoxyliertem Glycerintri(meth)acrylat umfasst.

8. Vernetzbare Formzusammensetzung nach Anspruch 7, worin die vernetzbare Monomerkomponente (2) aus einer oder mehreren der folgenden (A) bis (D) ausgewählt ist:
(A) die vernetzbare Monomerkomponente (2) umfasst eines oder mehrere ausgewählt aus Glycerindi(meth)acrylat, Divinylbenzol, Ethylenglykoldi(meth)acrylat und Tripropylenglykoldi(meth)acrylat;
(B) die vernetzbare Monomerkomponente (2) umfasst ein Monomer mit zumindest 3 und bis zu 8, vorzugsweise 6, ethylenisch ungesättigten Gruppen;
(C) die vernetzbare Monomerkomponente (2) umfasst eines oder mehrere ausgewählt aus Pentaerythrittetra(meth)acrylat, Dipentaerythrithexa(meth)acrylat, Trimethylolpropantriacrylat, Tris(2-hydroxyethyl)isocyanurattriacrylat und ethoxylierten und propoxylierten Versionen der oben Genannten; und
(D) zumindest ein Teil der vernetzbaren Monomerkomponente (2) ist durch einen stöchiometrischen Überschuss der ethylenisch ungesättigten Komponente (ii) bereitgestellt.

9. Vernetzbare Formzusammensetzung nach einem der vorangegangenen Ansprüche, worin (i) das Verhältnis, ausgedrückt in Gew.-% auf Basis des Gesamtgewichts des Reaktivverdünner-Monomers und des Vernetzermonomers, zwischen Reaktivverdünner-Monomer und Vernetzermonomer im Bereich von 10:90 bis 50:50, vorzugsweise
10:90 bis 45:55, noch bevorzugter
10:90 bis 40:60 liegt; und/oder
(ii) das Verhältnis des funktionalisierten Isocyanatprodukts zur Monomerkomponente, ausgedrückt in Gew.-% auf Basis des Gesamtgewichts des funktionalisierten Isocyanatprodukts und der Monomerkomponente, im Bereich von 80:20 bis 20:80, vorzugsweise 70:30 bis 30:70, geeigneterweise im Bereich von 65:35 bis 35:65 und besonders bevorzugt im Bereich von 60:40 bis 40:60 liegt.

10. Vernetzbare Formzusammensetzung nach einem der vorangegangenen Ansprüche, die zusätzlich Folgendes umfasst:
(3) eine Verstärkungskomponente, die vorzugsweise aus einer oder mehreren der folgenden (i) bis (vii) ausgewählt ist:
(i) die Verstärkungskomponente umfasst zumindest eines ausgewählt aus Fasern, Strängen, Bändern, Drähten, Whiskern und Rohren; und/oder
(ii) die Verstärkungskomponente besteht aus anorganischem Material; und/ oder
(iii) die Verstärkungskomponente besteht aus anorganischen Fasern, vorzugsweise Glasfasern; und/oder
(iv) die Verstärkungskomponente besteht aus gehackten Fasern; und/oder
(v) die Verstärkungskomponente umfasst nichtgewebte Fasern; und/oder
(vi) worin die Fasern eine Vliesmatte umfassen; und/oder
(vii) die Verstärkungskomponente besteht aus Fasern, worin die Fasern in Form einer pulvergebundenen Textilglasmatte vorliegen.

11. Vernetzbare Formzusammensetzung nach einem der vorangegangenen Ansprüche, worin die Zusammensetzung, wenn sie gehärtet ist, zumindest eine der folgenden (A) bis (C) aufweist:
(A) eine HDT von zumindest 260 °C, vorzugsweise zumindest 265 °C, noch bevorzugter zumindest 270 °C, insbesondere 280 °C oder mehr;
(B) eine HDT, die um zumindest 60 °C höher ist als die Härtungstemperatur;
(C) eine HDT von zumindest 270 °C nach Härtung bei 200 °C.

12. Vernetzbares Harz, das von einer Zusammensetzung, wie sie in einem der Ansprüche 1 bis 11 beansprucht ist, und (3) einer Verstärkungskomponente herrührt.

13. Verfahren zur Herstellung einer vernetzbaren Formzusammensetzung, wie sie in einem der Ansprüche 1 bis 11 beansprucht ist, wobei das Verfahren die folgenden Schritte umfasst:
(1) Herstellen eines funktionalisierten Isocyanatprodukts aus der Reaktion von
(i) einer Isocyanatkomponente mit einer Isocyanatfunktionalität von 2 oder mehr; und
(ii) einer ethylenisch ungesättigten Komponente mit zumindest einer mit einer Isocyanatgruppe der Isocyanatkomponente reaktiven funktionellen Gruppe und zumindest zwei ethylenisch ungesättigten Gruppen;
(2) Kombinieren des Reaktionsprodukts aus (1) mit einer Monomerkomponente, die ein Vernetzermonomer mit zumindest 2 ethylenisch ungesättigten Gruppen umfasst, mit der Maßgabe, dass zumindest eine aus der ethylenisch ungesättigten Komponente (ii) und/oder der Monomerkomponente (2) so gewählt ist, dass sie zumindest 3 ethylenisch ungesättigte Gruppen aufweist; und gegebenenfalls
(3) Kombinieren einer Verstärkungskomponente mit dem Gemisch aus (1) und (2), wobei das funktionalisierte Isocyanatprodukt (1) und/oder die Monomerkomponente (2) wie in den Ansprüchen 1 bis 9 definiert sind/ist und wobei das Verfahren zusätzlich einen oder mehrere der folgenden Schritte (A) bis (E) umfasst:
(A) wobei die Monomerkomponente zusätzlich zum Vernetzermonomer ein Vinylaromaten-Reaktivverdünner-Monomer mit zumindest 1 ethylenisch ungesättigten Gruppe umfasst und das Verfahren den Schritt des Hinzufügens einer ein Reaktivverdünner-Monomer umfassenden Monomerkomponente zum Reaktionsgemisch aus der Isocyanatkomponente und der ethylenisch ungesättigten Komponente, gegebenenfalls vor oder während der Reaktion der Isocyanatkomponente und der ethylenisch ungesättigten Komponente, umfasst;
(B) wobei die ethylenisch ungesättigte Komponente in stöchiometrischem Überschuss in Bezug auf die Isocyanatgruppen der Isocyanatkomponente bereitgestellt wird;
(C) wobei die Isocyanatkomponente und die ethylenisch ungesättigte Komponente bei einer Temperatur im Bereich von 50 bis 100 °C, vorzugsweise im Bereich von 70 bis 90 °C, umgesetzt werden;
(D) wobei die Reaktion zwischen der Isocyanatkomponente und der oder jeder ethylenisch ungesättigten Komponente fortgesetzt wird, bis der Isocyanatgehalt weniger als 1 % beträgt, gegebenenfalls bis der Isocyanatgehalt weniger als 0,5 % beträgt, und
(E) wobei im Schritt des Herstellens des funktionalisierten Isocyanatprodukts ein Katalysator eingesetzt wird, wobei gegebenenfalls der Katalysator Dibutylzinndilaurat ist.

14. Verfahren zur Herstellung eines verstärkten vernetzten Harzes, wobei das Verfahren die folgenden Schritte umfasst:
(I) Herstellen eines vernetzbaren funktionalisierten Isocyanatprodukts aus der Reaktion aus
einem funktionalisierten Isocyanatprodukt mit zumindest sechs ethylenisch ungesättigten Gruppen, das das Reaktionsprodukt ist aus
(i) einer Isocyanatkomponente mit einer Isocyanatfunktionalität von zwei oder mehr, und
(ii) einer ethylenisch ungesättigten Komponente mit zumindest einer mit einer Isocyanatgruppe der Isocyanatkomponente reaktiven funktionellen Gruppe und zumindest zwei ethylenisch ungesättigten Gruppen; und
(II) Kombinieren des Reaktionsprodukts aus (1) mit einer Monomerkomponente, die ein Vernetzermonomer mit zumindest zwei ethylenisch ungesättigten Gruppen umfasst, mit der Maßgabe, dass zumindest eine aus der ethylenisch ungesättigten Komponente (ii) und/oder der Monomerkomponente (2) so gewählt ist, dass sie zumindest drei ethylenisch ungesättigte Gruppen aufweist;
(III) Kombinieren einer Verstärkungskomponente mit dem Gemisch aus (1) und (2); und
(IV) Auslösen der Vernetzungsreaktion zwischen der Monomerkomponente und dem funktionalisierten Isocyanatprodukt; und gegebenenfalls
(V) Härten der Harzzusammensetzung;
wobei (i) die Isocyanatkomponente, (ii) die ethylenisch ungesättigte Komponente, (2) die Monomerkomponente und (3) die Verstärkungskomponente wie in einem der Ansprüche 1 bis 10 definiert sind und wobei der Schritt des Härtens des Harzes vorzugsweise eines oder mehrere der folgenden Merkmale (i) bis (ix) umfasst:
(i) der Härtungsschritt umfasst eine Härtungsphase und eine Nachhärtungsphase; und/oder
(ii) die Härtungsphase erfolgt bei Raumtemperatur; und/oder
(iii) die Dauer der Härtungsphase beträgt 5 bis 15 Stunden; und/oder
(iv) die Nachhärtungsphase umfasst das Erhitzen der Harzzusammensetzung auf eine Temperatur über 60 °C; und/oder
(v) die Dauer der Nachhärtungsphase beträgt zumindest 2 Stunden; und/oder
(vi) der Nachhärtungsschritt umfasst zwei Nachhärtungsphasen; und/oder
(vii) eine zweite Nachhärtungsphase erfolgt bei einer Temperatur über 100 °C; und/oder
(viii) die Dauer der zweiten Nachhärtungsphase beträgt zumindest 1 Stunde; und/oder
(ix) die Harzzusammensetzung wird in einer ersten Phase 5 Stunden lang bei einer Temperatur im Bereich von 60 bis 100 °C nachgehärtet, gefolgt von Nachhärtung in der zweiten Phase für 3 Stunden bei einer Temperatur im Bereich von 150 bis 300 °C.

15. Verfahren zur Herstellung eines vernetzten Harzes, wobei das Verfahren den Schritt des Kombinierens eines vernetzenden Initiators und gegebenenfalls auch einer Verstärkungskomponente mit einer ein funktionalisiertes Isocyanatprodukt (1) und eine Monomerkomponente (2), wie sie in einem der Ansprüche 1 bis 9 definiert sind, umfassenden Zusammensetzung umfasst.

16. Formteil, erhalten durch Formen einer Zusammensetzung, wie sie in einem der Ansprüche 1 bis 11 beansprucht ist.

## Revendications

1. Composition de moulage réticulable comprenant :
(1) un produit isocyanate fonctionnalisé ayant au moins six groupes à insaturation éthylénique, qui est le produit de la réaction de
(i) un composant isocyanate ayant une fonctionnalité isocyanate de deux ou plus, et
(ii) un composant à insaturation éthylénique ayant au moins un groupe fonctionnel qui est réactif avec un groupe isocyanate du composant isocyanate et au moins deux groupes à insaturation éthylénique ; et
(2) un composant monomère comprenant un monomère diluant réactif vinylaromatique et un monomère de réticulation ayant au moins deux groupes à insaturation éthylénique,
dans laquelle au moins l'un parmi un composant à insaturation éthylénique (ii) et/ou un composant monomère de réticulation (2) est choisi de façon à avoir au moins trois groupes à insaturation éthylénique.

2. Composition de moulage réticulable selon la revendication 1, dans laquelle le monomère diluant réactif est un monomère vinylaromatique et de préférence est au moins l'un choisi parmi le styrène, le méthylstyrène, l'éthylstyrène, un styrène halogéné et le vinyltoluène.

3. Composition de moulage réticulable selon la revendication 1 ou 2, dans laquelle le composant isocyanate (i) est choisi parmi un ou plusieurs des (A) à (F) suivants :
(A) un composant isocyanate qui contient des résidus trimères d'isocyanurate de formule (I) : 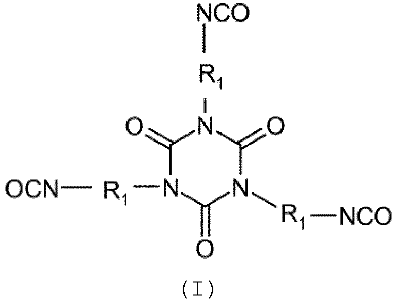 où R₁ dans la formule (I) est un groupe organique divalent choisi parmi un groupe alkylène aliphatique, un groupe alkylène cycloaliphatique, un groupe arylène et un groupe alcarylène ;
(B) un composant isocyanate qui contient des résidus trimères d'iminooxadiazine-dione de formule (II) : 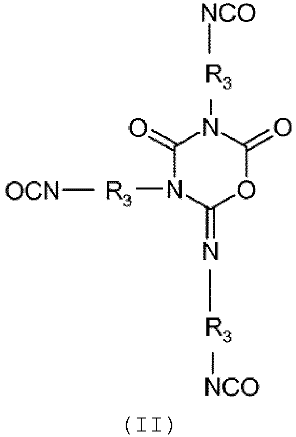 où R₃ dans la formule (II) est un groupe organique divalent choisi parmi un groupe alkylène aliphatique, un groupe alkylène cycloaliphatique, un groupe arylène et un groupe alcarylène ;
(C) un composant isocyanate qui contient des résidus dimères d'urétidone de formule (III) : 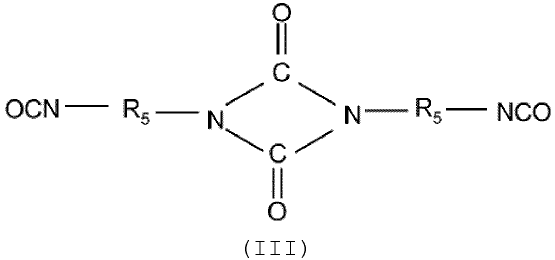 où R₅ dans la formule (III) est un groupe organique divalent choisi parmi un groupe alkylène aliphatique, un groupe alkylène cycloaliphatique, un groupe arylène et un groupe alcarylène ;
(D) un composant isocyanate qui dérive d'un diisocyanate d'alkylène ayant de 4 à 12 atomes de carbone dans la chaîne alkylène et a une fonctionnalité isocyanate de 2 à 3,5, et de préférence qui dérive de diisocyanate d'hexaméthylène ;
(E) un composant isocyanate qui dérive d'un diisocyanate cycloaliphatique et a une fonctionnalité isocyanate de 2 à 4, et de préférence qui dérive de diisocyanate d'isophorone et a une fonctionnalité isocyanate de 3 à 4 ; et
(F) un composant isocyanate qui dérive d'un isocyanate aromatique hydrogéné, de préférence choisi parmi le diisocyanate de diphénylméthane hydrogéné (MDI hydrogéné), le diisocyanate de toluène hydrogéné (TDI hydrogéné), le diisocyanate de tétraméthylxylylène hydrogéné (h-TMXDI), ou le diisocyanate de polyméthylène-polyphényle hydrogéné (PAPI hydrogéné), chacun ayant de préférence une fonctionnalité de 2 à 3,5.

4. Composition de moulage réticulable selon l'une quelconque des revendications précédentes, dans lequel un composant à insaturation éthylénique (ii) est choisi de façon à avoir trois ou plus de trois groupes à insaturation éthylénique, le groupe fonctionnel d'un composant à insaturation éthylénique (ii) qui est réactif avec le groupe isocyanate du composant isocyanate est un groupe à fonctionnalité hydroxyle et les groupes à insaturation éthylénique sont des groupes (méth)acrylate, et de préférence le composant à insaturation éthylénique est choisi parmi un ou plusieurs des (A) et (B) suivants :
(A) un composant à insaturation éthylénique (ii) qui contient un tri(méth)acrylate à fonctionnalité hydroxyle ; et/ou
(B) un composant à insaturation éthylénique qui contient un ou plusieurs parmi le tri(méth)acrylate de pentaérythritol et le penta(méth)acrylate de dipentaérythritol.

5. Composition de moulage réticulable selon l'une quelconque des revendications précédentes, dans laquelle le composant à insaturation éthylénique (ii) comprend une combinaison de deux ou plus de deux composants choisis parmi au moins l'un des (A) à (D) suivants :
(A) une combinaison de :
(iia) un composant à insaturation éthylénique ayant de 3 à 5 groupes à insaturation éthylénique, et
(iib) un composant à insaturation éthylénique ayant 1 ou 2 groupes à insaturation éthylénique ;
(B) une combinaison de :
(iia) un composant acrylate ayant de 3 à 5 groupes (méth)acrylate, et
(iib) un composant acrylate ayant 2 groupes (méth)acrylate ;
(C) une combinaison de :
(iia) un tri(méth)acrylate à fonctionnalité hydroxy et/ou un tétra(méth)acrylate à fonctionnalité hydroxy, et
(iib) un di(méth)acrylate à fonctionnalité hydroxy ; et
(D) une combinaison selon l'un quelconque de (A) à (C), dans laquelle le rapport molaire des composants (iia) à (iib) est de 80/20 à 20/80, de préférence de 75/25 à 25/75, mieux encore de 70/30 à 30/70, en particulier de 65/35.

6. Composition de moulage réticulable selon l'une quelconque des revendications précédentes, dans laquelle le composant à insaturation éthylénique (ii) comprend au moins un composant choisi parmi le di(méth)acrylate de triméthylolpropane et le di(méth)acrylate de glycérol et de préférence dans laquelle le composant à insaturation éthylénique (ii) comprend (iia) du triacrylate de pentaérythritol et (iib) du diméthacrylate de glycérol.

7. Composition de moulage réticulable selon l'une quelconque des revendications précédentes, dans laquelle un monomère de réticulation du composant monomère (2) comprend au moins un monomère choisi parmi un divinyle ou un vinyle supérieur et un diméth(acrylate) ou un méth(acrylate) supérieur, et de préférence comprend au moins un monomère choisi parmi le divinylbenzène ; un di(méth)acrylate à fonctionnalité hydroxyle, le di(méth)acrylate de glycérol, le di(méth)acrylate de triméthylolpropane, le tri(méth)acrylate de pentaérythritol et le penta(méth)acrylate de dipentaérythritol ; les (méth)acrylates difonctionnels et polyfonctionnels qui n'ont pas de groupe hydroxyle, le di(méth)acrylate d'éthylèneglycol, le di(méth)acrylate de diéthylèneglycol, le di(méth)acrylate de dipropylèneglycol, le di(méth)acrylate de 1,3-butanediol, le di(méth)acrylate de 1,4-butanediol, le di(méth)acrylate de 1,6-hexanediol, le tri(méth)acrylate de triméthylolpropane et le tétra(méth)acrylate de pentaérythritol ; et les versions éthoxylées ou propoxylées des (méth)acrylates mentionnés ci-dessus, le tri(méth)acrylate de triméthylolpropane éthoxylé, le tétra(méth)acrylate de pentaérythritol éthoxylé, le di(méth)acrylate de bisphénol A éthoxylé, le tri(méth)acrylate de triméthylolpropane propoxylé, et le tri(méth)acrylate de glycérol propoxylé.

8. Composition de moulage réticulable selon la revendication 7, dans laquelle le composant monomère de réticulation (2) est choisi parmi un ou plusieurs des (A) à (D) suivants :
(A) le composant monomère de réticulation (2) comprend un ou plusieurs monomères choisis parmi le di(méth)acrylate de glycérol, le divinylbenzène, le di(méth)acrylate d'éthylèneglycol et le di(méth)acrylate de tripropylèneglycol ;
(B) le composant monomère de réticulation (2) comprend un monomère ayant au moins 3 et jusqu'à 8, de préférence jusqu'à 6 groupes à insaturation éthylénique ;
(C) le composant monomère de réticulation (2) comprend un ou plusieurs monomères choisis parmi le tétra(méth)acrylate de pentaérythritol, l'hexa(méth)acrylate de dipentaérythritol, le triacrylate de triméthylolpropane, le triacrylate d'isocyanurate de tris(2-hydroxyéthyle) et les versions éthoxylées et propoxylées des précédentes ; et
(D) au moins une partie du composant monomère de réticulation (2) est fournie par un excès stoechiométrique de composant à insaturation éthylénique (ii).

9. Composition de moulage réticulable selon l'une quelconque des revendications précédentes, dans laquelle
(i) le rapport, en termes de pourcentages en poids par rapport au poids total du monomère diluant réactif et du monomère de réticulation, du monomère diluant réactif au monomère de réticulation, est situé dans la plage allant de 10/90 à 50/50, tout spécialement de 10/90 à 45/55, en particulier de 10/90 à 40/60 ; et/ou
(ii) le rapport du produit isocyanate fonctionnalisé au composant monomère, en termes de pourcentages en poids par rapport au poids total du produit isocyanate fonctionnalisé et du composant monomère, est situé dans la plage allant de 80/20 à 20/80, en particulier de 70/30 à 30/70, convenablement dans la plage allant de 65/35 à 35/65 et de préférence dans la plage allant de 60/40 à 40/60.

10. Composition de moulage réticulable selon l'une quelconque des revendications précédentes, qui comprend de plus
(3) un composant de renforcement qui est de préférence choisi parmi un ou plusieurs des (i) à (vii) suivants :
(i) le composant de renforcement comprend au moins un composant choisi parmi les fibres, les brins, les rubans, les fils, les barbes et les tubes ; et/ou
(ii) le composant de renforcement est composé de matériau inorganique ; et/ou
(iii) le composant de renforcement est composé de fibres inorganiques, de préférence de fibres de verre ; et/ou
(iv) le composant de renforcement est composé de fibres hachées ; et/ou
(v) le composant de renforcement comprend des fibres non tissées ; et/ou
(vi) les fibres comprennent un mat non tissé ; et/ou
(vii) le composant de renforcement est composé de fibres, les fibres étant sous la forme d'un mat de brins hachés liés par une poudre.

11. Composition de moulage réticulable selon l'une quelconque des revendications précédentes, laquelle composition, une fois durcie, présente au moins l'un des (A) à (C) suivants :
(A) une TFC d'au moins 260°C, convenablement d'au moins 265°C, en particulier d'au moins 270°C, de préférence de 280°C ou plus ;
(B) une TFC supérieure d'au moins 60°C à la température de durcissement ;
(C) une TFC d'au moins 270°C lorsqu'elle est durcie à 200°C.

12. Résine réticulée dérivée d'une composition selon l'une quelconque des revendications 1 à 11 et (3) d'un composant de renforcement.

13. Procédé pour produire une composition de moulage réticulable selon l'une quelconque des revendications 1 à 11, le procédé comprenant les étapes consistant à :
(1) former un produit isocyanate fonctionnalisé à partir de la réaction de
(i) un composant isocyanate ayant une fonctionnalité isocyanate de 2 ou plus ; et
(ii) un composant à insaturation éthylénique ayant au moins un groupe fonctionnel qui est réactif avec un groupe isocyanate du composant isocyanate et au moins deux groupes à insaturation éthylénique ;
(2) combiner le produit réactionnel de (1) avec un composant monomère comprenant un monomère de réticulation ayant au moins 2 groupes à insaturation éthylénique, sous réserve qu'au moins l'un parmi un composant à insaturation éthylénique (ii) et/ou un composant monomère (2) soit choisi de façon à avoir au moins trois groupes à insaturation éthylénique ; et éventuellement
(3) combiner un composant de renforcement avec le mélange de (1) et (2),
dans lequel le produit isocyanate fonctionnalisé (1) et/ou le composant monomère (2) sont tels que définis dans l'une quelconque des revendications 1 à 9, lequel procédé comprend éventuellement une ou plusieurs des étapes (A) à (E) suivantes :
(A) le composant monomère comprend, en plus du monomère de réticulation, un monomère diluant réactif vinylaromatique ayant au moins 1 un groupe à insaturation éthylénique, et le procédé comprend l'étape consistant à ajouter le composant monomère comprenant un monomère diluant réactif au mélange réactionnel du composant isocyanate et du composant à insaturation éthylénique, éventuellement avant ou pendant la réaction du composant isocyanate et du composant à insaturation éthylénique ;
(B) le composant à insaturation éthylénique est fourni en excès stoechiométrique par rapport aux groupes isocyanate du composant isocyanate ;
(C) le composant isocyanate et le composant à insaturation éthylénique sont mis à réagir à une température située dans la plage allant de 50 à 100°C, de préférence dans la plage allant de 70 à 90°C ;
(D) la réaction entre le composant isocyanate et le ou chaque composant à insaturation éthylénique est poursuivie jusqu'à ce que la teneur en isocyanate soit inférieure à 1 %, éventuellement jusqu'à ce que la teneur en isocyanate soit inférieure à 0,5 %, et
(E) un catalyseur est utilisé dans l'étape de formation du produit isocyanate fonctionnalisé, le catalyseur étant éventuellement le dilaurate de dibutyl-étain.

14. Procédé pour produire une résine réticulée renforcée, le procédé comprenant les étapes consistant à
(I) former un produit isocyanate fonctionnalisé réticulable à partir de la réaction de
un produit isocyanate fonctionnalisé ayant au moins six groupes à insaturation éthylénique, qui est le produit de la réaction de
(i) un composant isocyanate ayant une fonctionnalité isocyanate de deux ou plus, et
(ii) un composant à insaturation éthylénique ayant au moins un groupe fonctionnel qui est réactif avec un groupe isocyanate du composant isocyanate et au moins deux groupes à insaturation éthylénique ; et
(II) combiner le produit réactionnel de (1) avec un composant monomère comprenant un monomère de réticulation ayant au moins deux groupes à insaturation éthylénique, sous réserve qu'au moins l'un parmi un composant à insaturation éthylénique (ii) et/ou un composant monomère (2) soit choisi de façon à avoir au moins trois groupes à insaturation éthylénique ;
(III) combiner un composant de renforcement avec le mélange de (1) et (2) ; et
(IV) effectuer la réaction de réticulation entre le composant monomère et le produit isocyanate fonctionnalisé ; et éventuellement
(V) durcir la composition de résine ;
dans lequel (i) le composant isocyanate, (ii) le composant à insaturation éthylénique, (2) le composant monomère et (3) le composant de renforcement sont tels que définis dans l'une quelconque des revendications 1 à 10, et dans lequel l'étape de durcissement de la résine comprend de préférence un ou plusieurs des (i) à (ix) suivants :
(i) l'étape de durcissement comprend un stade de durcissement et un stade de post-durcissement ; et/ou
(ii) un stade de durcissement a lieu à la température ambiante ; et/ou
(iii) la durée d'un stade de durcissement est de 5 à 15 heures ; et/ou
(iv) un stade de post-durcissement comprend le chauffage de la composition de résine à une température supérieure à 60°C ; et/ou
(v) la durée d'un stade de post-durcissement est d'au moins 2 heures ; et/ou
(vi) l'étape de post-durcissement comprend deux stades de post-durcissement ; et/ou
(vii) un deuxième stade de post-durcissement est à une température supérieure à 100°C ; et/ou
(viii) la durée d'un deuxième stade de post-durcissement est d'au moins une heure ; et/ou
(ix) la composition de résine est post-durcie dans un premier stade à une température située dans la plage allant de 60 à 100°C pendant 5 heures, opération suivie d'un post-durcissement dans le deuxième stade à une température située dans la plage allant de 150 à 300°C pendant 3 heures.

15. Procédé pour produire une résine réticulée, le procédé comprenant l'étape consistant à combiner un amorceur de réticulation et éventuellement aussi un composant de renforcement avec une composition comprenant un produit isocyanate fonctionnalisé (1) et un composant monomère (2) telle que définie dans l'une quelconque des revendications 1 à 9.

16. Article façonné obtenu par moulage d'une composition selon l'une quelconque des revendications 1 à 11.
